# FASCICULE DE BREVET EUROPEEN

(11) **EP 2 646 179 B1**
(45) Date de publication et mention de la délivrance du brevet: **06.03.2019**
(21) Numéro de dépôt: 11700410.1
(22) Date de dépôt: 12.01.2011
(51) Int. Cl.: B21B 1/22, B21B 13/02, B21B 27/02, B21B 31/10

(54) **INSTALLATION POUR ET METHODE DE CHANGEMENT DES CYLINDRES ET/OU GRAPPES D'UNE CAGE DE LAMINAGE ; CAGE DE LAMINAGE COMPRENANT UN SYSTEME DE VERROUILLAGE ET DE CLAMAGE**
VORRICHTUNG UND VERFAHREN ZUM AUSTAUSCHEN VON WALZEN UND/ODER CLUSTERN EINES WALZGERÜSTS ; WALZGERÜST MIT EINEM VERRIEGELUNGS- UND SPANNSYSTEM
EQUIPMENT AND METHOD FOR CHANGING CYLINDERS AND/OR CLUSTERS OF A ROLL STAND ; ROLL STAND COMPRISING A LOCKING AND CLAMPING SYSTEM;

(30) Priorité: 02.12.2010 EP 10290636
(43) Date de publication de la demande: 09.10.2013
(73) Titulaire: Primetals Technologies France SAS, 42600 Savigneux (FR)
(72) Inventeur: CHARRE, Francis, F-42510 Balbigny (FR); ROSSIGNEUX, Bernard, F-42600 Lezigneux (FR); GUILLOT, Yves, F-42130 Trelins (FR)
(74) Mandataire: Metals@Linz
(86) Numéro de dépôt international: PCT/EP2011/050355
(87) Numéro de publication internationale: WO 2012/072274

(56) Documents cités:
- WO-A1-2004/041456
- DE-A1- 19 747 013
- JP-A- 59 183 912
- JP-A- 61 206 509
- JP-A- 62 234 606
- KR-B1- 100 685 041
- US-A- 3 180 125
- US-A- 3 203 346
- US-A- 3 813 912
- US-A- 5 107 695

## Description

La présente invention concerne une installation de démontage adaptée au changement des cylindres et/ou grappes d'une cage de laminage d'une installation de laminage, une cage de laminage et une méthode de changement des cylindres et/ou grappes d'une cage de laminage, selon les préambules des revendications, 9 et 12 (voir, par exemple, WO 2004/041456).

La présente invention se rapporte en particulier au domaine du laminage de bandes métalliques, notamment des aciers spéciaux comme les aciers inoxydables, à l'aide d'une installation de laminage comprenant généralement au moins une cage de laminage. Plus particulièrement, la présente invention se rapporte à une installation de démontage/remontage des cylindres et/ou grappes d'une cage de laminage supportée latéralement et à son fonctionnement, ladite cage de laminage étant destinée au laminage de tout type de métal, dont en particulier les aciers inoxydables. Lesdits cylindres et grappes de la cage de laminage seront présentés et décrits de manière détaillée dans la suite du présent document.

Classiquement, une cage de laminage est équipée de deux cylindres de travail superposés verticalement, ayant chacun leur axe longitudinal de rotation parallèle au plan de défilement de la bande métallique et placé dans un même plan de serrage sensiblement perpendiculaire à la direction de défilement de la bande entre lesdits cylindres de travail. La bande à laminer est destinée à passer entre les deux cylindres de travail de manière continue, i.e. en défilant toujours dans un même sens, ou de manière réversible, i.e. en défilant alternativement dans un sens puis dans l'autre.

Lors du laminage, les cylindres de travail sont généralement pressés l'un contre l'autre par un couple de cylindres d'appui ayant chacun leur axe longitudinal dans ledit même plan de serrage (ou au voisinage dudit plan de serrage), et entre lesquels est appliquée une pression - ou un effort - de laminage. Dans une configuration de cage de laminage particulière désignée habituellement sous le nom de "sexto" ou "6-High", un cylindre intermédiaire est intercalé entre le cylindre de travail et le cylindre d'appui situés d'un même côté de la bande à laminer. La cage de laminage est alors formée de six cylindres superposés verticalement les uns au-dessus des autres: un couple de cylindres de travail enserrant la bande à laminer, respectivement un cylindre de travail supérieur situé au-dessus du plan de défilement de la bande et un cylindre de travail inférieur situé en-dessous du plan de défilement de la bande, encadré par un premier couple de cylindres formé par les cylindres intermédiaires, respectivement un cylindre intermédiaire supérieur situé au-dessus du plan de défilement de la bande et un cylindre intermédiaire inférieur situé en-dessous du plan de défilement de la bande, eux-mêmes encadrés finalement par un deuxième couple de cylindres formé par les cylindres d'appui, respectivement un cylindre d'appui supérieur situé au-dessus du plan de défilement de la bande et un cylindre d'appui inférieur situé en-dessous du plan de défilement de la bande.

Finalement, une cage de laminage d'un laminoir de type sexto peut être qualifiée de "supportée latéralement" lorsqu'elle comporte des organes d'appuis latéraux des cylindres de travail. Ces organes d'appuis latéraux des cylindres de travail servent à reprendre des efforts de flexion engendrés par l'entrainement en rotation par friction de chaque cylindre de travail par le cylindre intermédiaire qui le contacte. En effet, les cylindres de travail, de petits diamètres, sont soumis à des efforts tangentiels importants de la part des cylindres intermédiaires lors de leur entraînement en rotation par friction, et ces efforts, ne pouvant être encaissés sans flexion excessive par les seuls cylindres de travail, doivent être repris par leurs organes d'appuis latéraux respectifs, qui permettent ainsi de limiter une déformation par flexion desdits cylindres de travail. Ainsi, chacun des cylindres de travail est en particulier en contact, latéralement, de part et d'autre du plan de serrage, avec au moins un organe d'appui latéral, comprenant par exemple un cylindre de soutien latéral lui-même soutenu latéralement, par contact, par deux rangées de galets d'appuis latéraux montés côte à côte.

De manière connue, les organes d'appuis latéraux sont disposés soit d'un seul côté du plan de serrage, en particulier du côté entrée de la bande dans la cage de laminage, ou des deux côtés du plan de serrage, i.e. du côté de l'entrée de la bande dans la cage de laminage, ainsi que du côté sortie de la bande hors de la cage de laminage. Ainsi, la configuration sexto est caractérisée d'une part, par un, ou respectivement deux organes d'appuis latéraux supérieurs soutenant latéralement un seul côté, ou respectivement les deux côtés latéraux du cylindre de travail supérieur, et d'autre part, un, ou respectivement deux organes d'appuis latéraux inférieurs soutenant latéralement un seul côté, ou respectivement les deux côtés latéraux du cylindre de travail inférieur. En particulier, chaque organe d'appui latéral supérieur comprend au moins un cylindre de soutien latéral supérieur apte à soutenir latéralement le cylindre de travail supérieur, lui-même soutenu par deux rangées de galets d'appuis supérieures aptes à supporter latéralement le cylindre de soutien latéral supérieur, et chaque organe d'appui latéral inférieur comprend au moins un cylindre de soutien latéral inférieur apte à soutenir latéralement le cylindre de travail inférieur, lui-même soutenu deux rangées de galets d'appuis inférieures aptes à supporter latéralement le cylindre de soutien latéral inférieur.

Chaque cylindre de soutien latéral, respectivement supérieur ou inférieur, et ses rangées de galets d'appui, respectivement supérieures ou inférieures, sont montés sur une poutre transversale à la cage de laminage, respectivement une poutre transversale supérieure ou inférieure, et constituent avec ladite poutre transversale une « grappe », respectivement une grappe supérieure ou inférieure. Chaque grappe est montée sur un bras de support apte à la supporter et à se déplacer par rotation et/ou coulissement par rapport à une partie constitutive de la cage de laminage, par exemple, par rapport à des empoises des cylindres intermédiaires, ou encore par rapport à la cage de laminage elle-même, ou par rapport à des empoises des cylindres d'appui. En particulier, un développement récent de ce type de cage de laminage sexto réalisée par la Déposante a montré que chacun des bras de support des organes d'appui latéraux a avantage à être porté par au moins un organe intermédiaire supporté par la cage de laminage, ledit organe intermédiaire étant apte à supporter les empoises des cylindres intermédiaires, tout en étant déplaçable par rapport à ladite cage de laminage, en l'occurrence des blocs de cambrage destinés au cambrage du cylindre intermédiaire et aptes à être déplacés verticalement par rapport à la cage de laminage.

Quelle que soit la configuration du portage des organes d'appuis latéraux, i.e. portage des organes d'appui latéraux par les empoises des cylindres intermédiaires, ou par les empoises des cylindres d'appui, ou par la cage elle-même, ou par l'organe intermédiaire, une des difficultés à résoudre par l'homme du métier est de doter l'installation de laminage de dispositifs permettant un démontage et un remontage efficaces des cylindres et des grappes de la cage de laminage, i.e. notamment des cylindres de travail, des cylindres intermédiaires, des organes d'appuis latéraux, des cylindres de soutiens latéraux, et des cylindres d'appui, afin de permettre de procéder au contrôle, à une réparation ou à un remplacement desdits cylindres et/ou grappes, ou d'autres éléments de la cage de laminage inaccessibles lorsque lesdits cylindres et/ou grappes sont montés dans ladite cage.

C'est ainsi que le brevet EP 0 908 246 de la Déposante décrit un dispositif de changement des cylindres intermédiaires et/ou de travail d'une cage de laminage de type sexto dont les organes d'appuis latéraux pivotent autour d'axes de pivotement solidaires des empoises des cylindres intermédiaires. Ce document décrit des améliorations de l'état de l'art appliqué à ce type de laminoir, et en particulier la manière d'extraire de la cage de laminage les cylindres de travail uniquement, et/ou les cylindres intermédiaires avec leurs organes d'appui latéraux dont ils sont solidaires. Les techniques et dispositifs décrits ne permettent malheureusement pas de démonter séparément les organes d'appui latéraux des cylindres intermédiaires. En effet, l'équipage formé par les cylindres intermédiaires et les organes d'appui latéraux doit d'abord être extrait de la cage de laminage avant d'être démonté, nécessitant d'une part une étape supplémentaire de démontage hors de ladite cage de laminage avant de pouvoir remplacer, réparer ou contrôler les cylindres intermédiaires et/ou les organes d'appuis latéraux, et d'autre part, des outillages spéciaux de manutention aptes à empêcher tout mouvement intempestif et dangereux des organes d'appui latéraux, notamment lors d'un retournement dudit équipage. De plus, les dispositifs de changement de cylindres intermédiaires basés sur le démontage et remontage dudit équipage impliquent un maintien d'un parc de pièces important comprenant non seulement des organes d'appuis latéraux désolidarisés du cylindre intermédiaire, mais aussi des équipages complets prêts pour un remplacement d'un équipage défectueux, cela afin d'assurer une rotation desdits équipages sans perte de temps liée au démontage dudit équipage défectueux.

Dans une autre disposition constructive décrite notamment dans WO 01/21334, ou WO 2004/041456 de la Déposante, et caractérisée par un portage des organes d'appui latéraux par la cage de laminage elle-même, lesdites grappes de la cage de laminage sexto appuyée latéralement peuvent coulisser dans des guides solidaires de la cage de laminage, dans une direction parallèle à l'axe longitudinal des cylindres, le long des bras de support des grappes. Selon cette autre disposition constructive, les cylindres intermédiaires peuvent être facilement extraits de la cage de laminage et leur maintenance réalisée de manière classique, sans outillages spéciaux, ni nécessité de démonter leurs empoises. Cependant, elle présente également des inconvénients du point de vue de la cinématique de la cage de laminage. En effet, le démontage des cylindres intermédiaires de cette autre disposition constructive est sujet à un risque d'interférence entre le cylindre de travail et les deux cylindres de soutien latéraux des organes d'appui latéraux lors de l'ouverture de la cage de laminage nécessaire à l'extraction desdits cylindres intermédiaires et du mouvement vertical consécutif des cylindres de travail.

En effet, l'arrangement général des cylindres de travail et de soutien latéraux fait qu'en position de travail, les axes de rotation des cylindres de soutien latéraux supérieurs sont situés au-dessus de l'axe de rotation du cylindre de travail supérieur et que la distance entre les deux cylindres de soutien latéraux, lorsqu'ils sont au contact du cylindre de travail, ne permet pas le passage du cylindre de travail vers le haut, i.e. en direction du cylindre d'appui supérieur. Tout mouvement vertical vers le haut du cylindre de travail supérieur peut donc se trouver entravé par la présence des deux cylindres de soutien latéraux supérieurs qui n'accompagnent pas le mouvement vertical du cylindre de travail supérieur. Ou, à contrario, ledit mouvement vertical peut se faire avec des cylindres de soutien latéraux trop écartés n'assurant pas la stabilité latérale du cylindre de travail. La situation est inversée pour les cylindres de travail et de soutien latéraux inférieurs, i.e. situés en dessous du plan de défilement de la bande dans l'emprise des cylindres de travail.

Avant tout mouvement vertical des cylindres de travail, il est donc nécessaire que les deux cylindres de soutien latéraux aient été à coup sûr écartés du cylindre de travail d'une distance suffisante pour ne pas entraver un déplacement vertical du cylindre de travail, tout en garantissant une stabilité latérale dudit cylindre de travail. La mise en oeuvre de cet écartement, généralement réalisé par un opérateur, augmente d'une part le temps nécessaire au démontage des cylindres de la cage de laminage, et n'est pas toujours fiable.

Un second inconvénient lié au démontage du cylindre intermédiaire de ladite autre disposition de cage de laminage réside en une interférence entre le cylindre de travail et les deux cylindres de soutien latéraux des organes d'appui latéraux lors de la fermeture de la cage de laminage et d'un mouvement vertical consécutif des cylindres de travail. Cette interférence entre le cylindre de travail et les cylindres de soutien latéraux peut trouver son origine, par exemple, dans un mauvais positionnement des cylindres de soutien latéraux lors de la maintenance de la cage de laminage par un opérateur (position des cylindres de soutien latéraux trop refermée par rapport à la position du cylindre de travail) ou dans la mise en place d'un nouveau cylindre de travail dont le diamètre est supérieur au diamètre du cylindre de travail qui a été remplacé, ou encore dans un dysfonctionnement de la cage de laminage ou dans une erreur de positionnement des différents cylindres. Dans tous les cas, il y aura interférence entre le cylindre de travail et les cylindres de soutien latéraux lors de la fermeture de la cage de laminage, ce qui nécessitera un nouveau démontage afin de contrôler, voire rectifier ou remplacer, les cylindres ayants interférés les uns avec les autres.

Finalement, le portage des organes d'appui latéraux par un organe intermédiaire entre la cage de laminage et les empoises des cylindres intermédiaires, en l'occurrence par des blocs de cambrage des cylindres intermédiaires, permet de résoudre la plupart des problèmes posés par le changement des cylindres ou grappes d'une cage de laminage dont les organes d'appui latéraux pivotent autour d'axes de pivotement solidaires des empoises des cylindres intermédiaires, ou d'une cage de laminage dont les organes d'appui latéraux coulissent dans des guides solidaires de la cage de laminage elle-même. Malheureusement, ce type de cage de laminage caractérisée par un portage des organes d'appui latéraux par un organe intermédiaire exige des dispositifs spécifiques de démontage des cylindres et des grappes qui sont, pour l'instant, inexistants ou inadaptés.

La présente invention a pour but de définir au moins un dispositif et une méthode de changement des cylindres et/ou grappes d'une cage de laminage adaptés au changement des cylindres et/ou grappes d'une cage de laminoir de type sexto dont les organes d'appui latéraux sont supportés par ledit organe intermédiaire, et en particulier pivotent autour d'axes de pivotement solidaires de blocs de cambrage des cylindres intermédiaires. Un autre but de la présente invention est de proposer une installation de changement des cylindres et/ou grappes, qui soit d'une part la plus efficace possible, notamment en minimisant le temps d'arrêt de la cage de lami-notamment en minimisant le temps d'arrêt de la cage de laminage durant une période de temps nécessaire au changement desdits cylindres et/ou grappes, et qui, d'autre part, permette une grande flexibilité d'emploi en autorisant notamment un changement ciblé ou sélectif de chacun des différents cylindres et/ou grappes, ainsi qu'une réduction des risques de détérioration des cylindres et/ou grappes relatifs auxdits changements.

Dans ce but, une installation de démontage des cylindres et/ou grappes de ladite cage de laminage, ainsi qu'une méthode de changement desdits cylindres et/ou grappes sont proposées par le contenu des revendications 1 et 12. Une cage de laminage selon l'invention est définie dans la revendication 9. Un ensemble de sous-revendications présente également des avantages de l'invention.

En particulier, le dispositif d'extraction est capable de monter dans la cage de laminage, ou de démonter de la cage de laminage, une grappe séparée d'un cylindre intermédiaire ou d'un cylindre de travail, ou un cylindre de soutien latéral séparé de ses rangées de galets, ou d'un cylindre intermédiaire, ou d'un cylindre de travail. En d'autres termes, le dispositif d'extraction selon l'invention est capable d'extraire ou de monter une grappe et/ou un cylindre de soutien latéral, ladite grappe étant libre de toute solidarisation avec un cylindre de travail ou intermédiaire, et ledit cylindre de soutien latéral étant libre de toute solidarisation avec un cylindre de travail, ou avec un cylindre intermédiaire, ou avec ses rangées de galets d'appui. Selon la présente invention, l'étape de montage ou démontage d'une grappe et/ou d'un cylindre de soutien latéral est séparée, ou autrement dit indépendante, d'une étape de démontage ou montage d'un cylindre de travail ou d'un cylindre intermédiaire, car le dispositif d'extraction est capable de prendre en charge une grappe et/ou un cylindre de soutien latéral séparément du cylindre de travail ou du cylindre intermédiaires ou de rangées de galets d'appui du cylindre de soutien latéral. Ainsi, le démontage et le montage du cylindre intermédiaire, aussi bien que le démontage et le montage du cylindre de travail, sont indépendants d'un démontage et d'un montage d'une grappe ou d'un cylindre de soutien latéral, et le démontage et montage du cylindre de soutien latéral peut être indépendant d'un démontage et d'un montage de la grappe à laquelle il appartient.

La présente invention concerne donc le changement de cylindres, par exemple le cylindre de travail, le cylindre intermédiaire, le cylindre de soutien latéral, et/ou de grappes d'une cage de laminage d'une bande à laminer par l'installation de démontage selon la présente invention à laquelle ladite cage de laminage est adaptée. En particulier, elle décrit une installation de démontage capable de changer des cylindres et/ou grappes d'une cage de laminage sexto supportée latéralement ayant une configuration telle que définie dans la revendication 9.

Ainsi, l'installation de démontage selon l'invention est en particulier apte à changer au moins un cylindre de soutien latéral et/ou au moins une grappe desdits organes d'appuis latéraux d'une telle cage de laminage dont les blocs de cambrage sont mobiles verticalement et servent de support aux organes d'appuis latéraux. A cette fin, la présente invention décrit un ensemble de dispositifs de démontage des cylindres et des grappes permettant le changement d'au moins un cylindre de soutien latéral et/ou d'au moins une grappe d'une telle cage de laminage ayant ladite configuration spéciale, libre d'un démontage simultané du cylindre de soutien latéral ou de ladite grappe et d'un cylindre intermédiaire ou d'un cylindre de travail, ce qui permet avantageusement de supprimer au moins une étape de démontage supplémentaire devant être effectuée hors de la cage de laminage, comme par exemple un démontage d'une solidarisation d'une grappe avec les empoises d'un cylindre intermédiaire, qui nécessiterait d'autres dispositifs de démontage, et engendrerait une perte de temps liée audit démontage supplémentaire.

Afin de permettre un démontage efficace des cylindres de soutien latéraux et/ou grappes, l'installation de démontage selon l'invention est en particulier caractérisée en ce que le dispositif d'extraction comprend un dispositif de déplacement de platine de préhension capable de déplacer au moins verticalement au moins une desdites platines de préhension. Par exemple, au moins un moteur solidaire de la traverse à l'extrémité de laquelle est montée ladite platine de préhension permet de commander le déplacement vertical, i.e. perpendiculaire à un axe longitudinal de la traverse, d'une ou des deux platines de préhensions équipant ladite traverse. Avantageusement, chaque platine de préhension de l'installation de démontage selon l'invention est ainsi déplaçable verticalement par un tel dispositif de déplacement de platine de préhension permettant de positionner chaque platine dans une position d'avancée, ladite position d'avancée étant destinée à permettre un mouvement horizontal, ou avancement, du dispositif d'extraction muni de ses platines de préhension, en direction de l'intérieur de la cage de laminage, et d'une manière libre de toute interaction avec la cage de laminage, en particulier avec les blocs de cambrage des cylindres intermédiaires, et permettant en particulier un déplacement rectiligne continu du dispositif d'extraction de la position de parking à la position de préhension.

Dans la position de préhension, le dispositif d'extraction est positionnable, en particulier automatiquement, dans une position centrée par rapport à la cage de laminage de manière à permettre à chaque organe d'appui latéral, en particulier à chaque grappe, de pivoter d'une position éloignée du dispositif d'extraction à une position rapprochée dudit dispositif d'extraction jusqu'à insertion de la grappe entre deux platines de préhension équipant une même traverse. Selon un premier mode de réalisation de l'invention, lors d'un changement des grappes et/ou cylindres de soutien latéral, toutes les grappes de la cage de laminage sont positionnées en position rapprochée et insérées entre les platines de préhension des traverses supérieures et inférieures, et seuls les pênes de verrouillages aptes à verrouiller et solidariser auxdites platines les grappes destinées à être changées et les grappes comprenant un cylindre de soutien latéral destiné à être changé sont actionnés afin de les solidariser auxdites platines, de sorte que les grappes et cylindres de soutien latéral ne devant pas être changés restent solidaires desdites platines. Selon un second mode de réalisation, seules les grappes destinées à être changées et les grappes comprenant un cylindre de soutien latéral destiné à être changé sont insérées entre lesdites platines afin d'y être solidarisées par verrouillage au moyen desdits pênes de verrouillage.

Avantageusement, l'installation de démontage selon l'invention est aussi caractérisée en particulier en ce que chaque platine de préhension comprend deux pênes de verrouillage de cylindre de soutien latéral et deux pênes de verrouillage de grappe, destinés respectivement au verrouillage/déverrouillage d'au moins un cylindre de soutien latéral, en particulier de deux cylindres de soutien latéral, et au verrouillage/déverrouillage d'au moins une grappe, en particulier de deux grappes. Ainsi, une paire de platines de préhension équipant une desdites traverses peut être solidarisée, au moyen desdits pênes de verrouillage de grappe et/ou de cylindre de soutien latéral, à une ou deux grappes, ou à un ou deux cylindres de soutien latéral, ou à une grappe et un cylindre de soutien latéral. Ainsi, la traverse supérieure (respectivement inférieure), sera capable, via ses platines de préhension aptes à être solidarisées à au moins une grappe et/ou au moins un cylindre de soutien latéral, de prendre en charge au moins une grappe supérieure (respectivement inférieure), ou au moins un cylindre de soutien latéral supérieur (respectivement inférieur), ou un cylindre de soutien latéral et une grappe supérieurs (respectivement inférieurs).

Le pivotement des bras de support de chaque grappe permet d'amener la grappe supportée par lesdits bras de support en une position rapprochée du dispositif d'extraction, entre les platines de préhension de la traverse supérieure s'il s'agit d'une grappe supérieure, ou entre les platines de préhension de la traverse inférieure s'il s'agit d'une grappe inférieure. Une fois la grappe en ladite position rapprochée, elle peut être prise en charge par les platines de préhension de la traverse supérieure, si c'est la grappe supérieure, ou inférieure si c'est la grappe inférieure. Ladite prise en charge comprend la solidarisation auxdites platines de préhension, soit du cylindre de soutien latéral de ladite grappe au moyen des pênes de verrouillage de cylindre de soutien latéral si le cylindre de soutien latéral doit être changé, ou soit de ladite grappe au moyen des pênes de verrouillage de grappe si la grappe doit être changée.

Avantageusement, l'installation de démontage selon l'invention est caractérisée en ce qu'au moins un desdits pênes de verrouillage de cylindre de soutien latéral est apte à actionner un système de verrouillage dudit cylindre de soutien latéral assurant la solidarisation dudit cylindre de soutien latéral avec ladite grappe. Ainsi, le pêne de verrouillage du cylindre de soutien latéral et le système de verrouillage dudit cylindre de soutien latéral sont aptes à coopérer l'un avec l'autre afin d'assurer une verrouillage, respectivement déverrouillage, du cylindre de soutien latéral avec la platine de préhension à laquelle le pêne appartient, afin de solidariser, respectivement désolidariser, ladite platine avec ledit cylindre de soutien latéral. Afin d'assurer cette coopération et une complémentarité du pêne de verrouillage de cylindre de soutien latéral avec ledit système de verrouillage, la présente invention propose un système de verrouillage dudit cylindre de soutien latéral d'une cage de laminage adapté à l'installation de démontage selon la présente invention. En effet, le système de verrouillage selon l'invention est en particulier caractérisé en ce qu'il comprend un dispositif de verrouillage d'axe, ledit dispositif de verrouillage d'axe étant disposé dans une extrémité de l'axe de rotation dudit cylindre de soutien latéral, en particulier à chaque extrémité dudit axe de rotation, ledit dispositif de verrouillage d'axe étant susceptible d'être maintenu d'une part dans une position verrouillée par un organe élastique, et d'autre part dans une position déverrouillée par action dudit pêne de verrouillage de cylindre de soutien latéral sur ledit dispositif de verrouillage d'axe, ladite action dudit pêne de verrouillage de cylindre de soutien latéral étant capable de contrebalancer une action dudit organe élastique.

Ainsi, la présente invention définit un système de verrouillage d'un cylindre de soutien latéral capable de coopérer avec le pêne de verrouillage de la platine de préhension. En particulier, un cylindre de soutien latéral peut être équipé, à chacune de ses extrémités, par ledit système de verrouillage, chacun des dispositifs de verrouillage d'axe de chacun des systèmes de verrouillage dudit cylindre de soutien latéral étant alors simultanément actionnables, en particulier automatiquement, par ledit pêne de verrouillage de cylindre de soutien latéral de chacune des platines de préhension destinées à ladite préhension dudit cylindre de soutien latéral. En particulier, le dispositif de verrouillage d'axe comprend une surface destinée à être contactée par une extrémité du pêne de verrouillage de cylindre de soutien latéral et dont la géométrie est complémentaire à la géométrie de ladite extrémité. Il s'agit par exemple d'une encoche du dispositif de verrouillage d'axe dans laquelle peut venir s'insérer ladite extrémité du pêne de verrouillage de cylindre de soutien latéral. Ledit pêne de verrouillage de cylindre de soutien latéral est en particulier capable d'exercer une pression sur ledit dispositif de verrouillage d'axe afin que ce dernier, par compression dudit organe élastique, passe de la position verrouillée à la position déverrouillée. Inversement, un relâchement de la pression exercée par le pêne de verrouillage de cylindre de soutien latéral sur le dispositif de verrouillage d'axe permet une détente dudit organe élastique apte à engendrer un déplacement dudit dispositif de verrouillage d'axe de sa position déverrouillée à sa position verrouillée. Dans sa position verrouillée, le dispositif de verrouillage d'axe est apte à solidariser le cylindre de soutien latéral à sa grappe, alors que dans sa position déverrouillée, ledit dispositif de verrouillage d'axe d'une part libère le cylindre de soutien latéral de sa grappe, et simultanément solidarise le cylindre de soutien latéral aux platines de préhension destinées à sa prise en charge. Ainsi, le pêne de verrouillage de cylindre de soutien latéral équipant chacune des deux platines de préhension destinées à la prise en charge dudit cylindre de soutien latéral est en particulier capable, par actionnement dudit dispositif de verrouillage d'axe du système de verrouillage susceptible d'équiper chacune des extrémités dudit cylindre de soutien latéral, de simultanément désolidariser ledit cylindre de soutien latéral de sa grappe et de le solidariser auxdites platines de préhension en une seule et même action, et inversement. Avantageusement, une fois que ledit cylindre de soutien latéral a été désolidarisé de sa grappe et solidarisé aux platines de préhension, ou inversement, désolidarisé des platines de préhension et solidarisé à la grappe, des organes de pression assurant la pré-charge du cylindre de soutien latéral sur ses rangées de galets d'appui sont relâchés, inversement actionnés, et les bras de supports pivotent afin de libérer un passage hors de la cage de laminage pour ledit dispositif d'extraction.

Egalement, au moins un desdits pênes de verrouillage de grappe est apte à actionner, en particulier automatiquement, lors du verrouillage, respectivement déverrouillage, de ladite grappe, au moins un système de clamage de ladite grappe capable de solidariser ladite grappe avec ses bras de support, respectivement de l'y désolidariser. Préférentiellement, chacun des systèmes de clamage de chacun des bras de support d'une même grappe est actionnable par un même et unique pêne de verrouillage de grappe, de sorte qu'un seul pêne de verrouillage de grappe est capable de commander ou actionner l'ensemble des systèmes de clamage de la grappe destinés à son verrouillage, respectivement déverrouillage. Préférentiellement, chacun desdits pênes de verrouillage de grappe est en particulier apte à verrouillé avec une extrémité de la poutre transversale de la grappe destinée à être changée. Ainsi, la poutre transversale de ladite grappe comprend, à chacune de ses extrémités, au moins une cavité destinée à coopérer avec ledit pêne de verrouillage de grappe afin d'assurer la solidarisation de ladite grappe avec la platine de préhension portant ledit pêne de verrouillage de grappe. Par exemple, ladite cavité et ledit pêne de verrouillage de grappe ont des formes géométriques complémentaires afin que ledit pêne de verrouillage de grappe soit insérable dans ladite cavité, ou encore, ladite cavité comprend par exemple un poussoir à ressort dont une extrémité dépasse en dehors de ladite cavité, ladite extrémité étant destinée à coopérer avec un berceau décrit plus tard dans le présent document. En particulier, ladite poutre transversale comprend deux cavités, respectivement une cavité à une extrémité de la poutre transversale et une autre cavité à l'autre extrémité de la poutre transversale, lesdites extrémités faisant référence aux extrémités longitudinales de ladite poutre transversale. Chacune de ces cavités est par exemple destinée à accueillir, en son sein, un pêne de verrouillage de grappe, respectivement, un des deux pênes de verrouillage de grappe de la platine de préhension équipant une extrémité de la traverse (supérieure, inférieure) et l'autre des deux pênes de verrouillage de grappe de l'autre platine de préhension équipant l'autre extrémité de la même traverse.

Préférentiellement, au moins une desdites cavités comprend en outre un système de commande mécanique, ou électrique, voire électromécanique, capable d'une part d'actionner, en particulier automatiquement, ledit système de clamage lors d'une interaction dudit système de commande avec le pêne de verrouillage de grappe, notamment lorsque ce dernier pénètre dans ladite cavité ou presse ledit poussoir à ressort, et d'autre part, capable d'actionner, en particulier automatiquement, au moins un pêne de verrouillage de grappe de façon à désolidariser ladite grappe de sa platine de préhension une fois que le système de clamage est solidaire de la grappe. En particulier, une seule cavité parmi lesdites cavités de la poutre transversale peut être équipée par un tel système de commande. Avantageusement, ce dernier est en particulier aussi capable d'actionner chacun desdits systèmes de clamage d'une même grappe simultanément. De la sorte, seul le pêne de verrouillage de grappe destiné à coopérer avec la seule cavité comprenant ledit système de commande sera capable d'actionner l'ensemble des systèmes de clamage de la grappe, i.e. chacun des deux systèmes de clamage équipant respectivement chacun un des deux bras de support de ladite grappe. En outre, au moins un desdits systèmes de clamage de la grappe est en particulier apte à actionner ledit système de commande, par exemple par envoi d'un signal électrique ou par couplage électromécanique, ou par couplage mécanique, lors d'une solidarisation du système de clamage avec la grappe, afin que le système de commande actionne au moins un pêne de verrouillage de grappe de façon à déverrouiller ladite grappe, préférentiellement tous les pênes de verrouillage de grappe destinés au verrouillage/déverrouillage de ladite grappe.

En particulier, ledit système de clamage de la grappe d'une cage de laminage adaptée à l'installation de démontage et destiné à coopérer avec ledit pêne de verrouillage de grappe est caractérisé en ce qu'il comprend un vérin solidaire d'un bras de support d'une grappe apte à solidariser ou désolidariser ladite grappe de son bras de support lors de l'actionnement dudit système de clamage par le pêne de verrouillage de grappe, via notamment ledit système de commande. Ledit vérin comprend de préférence une tige mobile. En particulier, ledit système de commande, actionnable par ledit pêne de verrouillage de grappe, est capable de commander ledit vérin. Inversement, une position de ladite tige mobile dudit vérin est en particulier capable d'actionner, automatiquement, ledit système de commande, afin que ce dernier commande un déverrouillage d'au moins un pêne de verrouillage de grappe, ou en particulier, de tous les pênes de verrouillage de ladite grappe. Selon un premier mode de réalisation préférentiel dudit système de clamage, ladite tige mobile dudit vérin comprend une extrémité en forme de Té destinée au verrouillage de ladite poutre transversale par insertion de ladite extrémité en forme de Té dans un espace de verrouillage de la poutre transversale de la grappe, ledit espace de verrouillage comprenant une rainure de verrouillage sur les bords de laquelle est apte à venir s'appuyer ladite extrémité en forme de Té, et un évidement apte à laisser passer ladite extrémité en forme de Té hors de l'espace de verrouillage. Selon un second mode de réalisation préférentiel dudit système de clamage, la tige mobile dudit vérin comprend une extrémité en forme de coin destinée au verrouillage de ladite poutre transversale par insertion de ladite extrémité en forme de coin dans une fente d'une pièce de verrouillage solidaire de la poutre transversale de la grappe.

Avantageusement, la grappe peut ainsi être solidarisée à ses bras de supports en étant simultanément désolidarisée des platines de préhensions la supportant, ou inversement, simultanément désolidarisée de ses bras de support et solidarisée aux platines de préhensions destinées à la prendre en charge, en une seule et même étape, notamment complètement automatique, ou au moins en partie automatisable. En effet, la pénétration dans ladite cavité d'au moins un desdits deux pênes de verrouillage de grappe destinés à la solidarisation/désolidarisation de la grappe avec ses platines de préhensions est apte à actionner ledit système de commande qui, à son tour, est capable de commander en temps réel au moins un desdits vérin afin qu'au moins un desdits système de clamage de la grappe désolidarise ladite poutre transversale de la grappe de ses bras de support. Inversement, la solidarisation au moyen du système de clamage de la grappe à ses bras de support est apte à actionner ledit système de commande qui, à son tour, est capable de commander en temps réel au moins un desdits pênes de verrouillage de grappe, afin qu'au moins un desdits pênes de verrouillage de grappe déverrouille, ou autrement dit, libère de ses platines de préhension ladite poutre transversale supportant ladite grappe.

Evidemment, une commande manuelle à distance du système de clamage, du système de commande, et du système de verrouillage est en particulier possible depuis un poste de contrôle à distance de l'installation de laminage, ou depuis un poste de contrôle de l'installation de démontage selon l'invention. Une fois la grappe solidarisée aux platines de préhension et désolidarisée de ses bras de support, respectivement désolidarisée des platines de préhension et solidarisée à ses bras de support, ces derniers pivotent en position écartée afin de libérer le passage hors de la cage de laminage pour le dispositif d'extraction.

Alors que le second mode de réalisation préférentiel dudit système de clamage permet de libérer la grappe par retrait dudit vérin de la pièce de verrouillage solidaire à la poutre transversale, ou de l'y solidariser par insertion dudit vérin dans la pièce de verrouillage solidaire à la poutre transversale, le premier mode de réalisation préférentiel dudit système de clamage nécessite un premier déplacement horizontal de la grappe afin de positionner l'extrémité en forme de Té dudit vérin dans l'évidement de la rainure de verrouillage pour la désolidarisation de ladite grappe de ses bras de support, et respectivement un second déplacement horizontal, inverse audit premier déplacement, pour déplacer ladite extrémité en forme de Té d'une position dans ledit évidement à une position dans la rainure de verrouillage où la forme en Té de l'extrémité dudit vérin sera apte à serrer les bords de ladite rainure, et donc la poutre transversale, contre les bras de supports de la grappe, lors de la solidarisation de ladite grappe à ses bras de support. Avantageusement, ledit premier déplacement horizontal et ledit second déplacement horizontal sont réalisables par ledit dispositif d'extraction, par exemple en étant mis en oeuvre par ledit organe de déplacement susceptible de déplacer simultanément la traverse supérieure et la traverse inférieure.

L'installation de démontage selon l'invention est de plus en particulier caractérisée en ce qu'elle comprend au moins un berceau mobile de préhension de grappe. En effet, au moins une platine de préhension d'une traverse selon l'invention est apte à coopérer avec un berceau mobile de préhension de grappe, positionnable entre ladite platine et l'autre platine équipant la même traverse, ledit berceau comprenant au moins un organe de supportage permettant un support dudit berceau par ladite platine de préhension. Chaque berceau mobile est en particulier apte à coopérer avec une desdites platines de préhension afin de garantir notamment le verrouillage / déverrouillage de grappes ou de cylindres de soutien latéral au moyen des pênes de verrouillage desdites platines. Avantageusement, deux berceaux mobiles, i.e. un premier berceau mobile coopérant avec la platine de préhension située à une extrémité de la traverse supérieure, respectivement inférieure, et un second berceau mobile coopérant avec la platine de préhension située à l'autre extrémité de ladite traverse supérieure, respectivement inférieure, sont en particulier solidarisés l'un avec l'autre par une poutre support, de sorte à former un U à l'envers encadré par les platines de préhension de la traverse supérieure et ladite traverse supérieure, et respectivement un U à l'endroit encadré par les platines de préhension de la traverse inférieure et ladite traverse inférieure. Ainsi, lesdits deux berceaux mobiles sont en particulier solidaires chacun à une extrémité de ladite poutre support, et ladite poutre support équipée de ses deux berceaux mobiles forme ainsi un outil de préhension de grappe insérable entre les platines de préhension de la traverse supérieure, ou inférieure, et apte à être supporté, via ses deux berceaux, par lesdites platines.

En particulier, ledit outil de préhension de grappe est capable de se déplacer par rapport aux platines de préhension qui l'encadrent, perpendiculairement à l'axe longitudinal de la traverse supérieure ou inférieure, notamment afin de prendre en charge une grappe, lors du démontage ou du montage de ladite grappe, en coopération avec lesdites platines de préhension. A cette fin, il peut être avantageusement équipé de moyens de déplacement permettant un déplacement dudit outil de préhension selon ladite seconde direction, d'une position initiale centrée sur l'axe longitudinal de ladite traverse supérieure ou inférieure, à une première et une seconde position éloignées, réparties symétriquement de part et d'autre de la position initiale, et adaptées chacune à la prise en charge d'une grappe supérieure ou inférieure. Préférentiellement, ledit moyen de déplacement dudit outil de préhension est en particulier également capable de déplacer ledit outil de préhension selon ladite première direction.

Avantageusement, lorsqu'une grappe est dans ladite position rapprochée, ledit outil de préhension est capable de se déplacer de la position initiale à la position éloignée, en direction de ladite grappe en position rapprochée, afin que celle-ci s'insère entre ses berceaux mobiles, ces derniers, solidarisés à ladite poutre support, étant aptes à se déplacer simultanément par rapport aux platines de préhension. Une fois la grappe insérée entre lesdits berceaux mobiles de l'outil de préhension, les pênes de verrouillage de chacune des platines de préhension encadrant ledit outil de préhension de grappe sont aptes à solidariser ladite grappe avec lesdits berceaux, ou autrement dit, avec ledit outil de préhension, et à libérer ladite grappe de ses bras de support. L'outil de préhension solidarisé à ladite grappe retourne ensuite à sa position initiale avant d'être extrait de la cage de laminage par ledit dispositif d'extraction. Un fonctionnement inverse permet un montage dans la cage d'une grappe solidarisée à un outil de préhension.

Dans une autre configuration, ledit outil de préhension est de plus en particulier déplaçable selon ladite première direction (i.e. longitudinalement par rapport au cylindre de soutien latéral) par ledit moyen de déplacement, et en particulier capable de faire effectuer à ladite grappe ledit premier déplacement et ledit second déplacement. En particulier, ledit outil de préhension est capable de prendre en charge ladite grappe lorsque cette dernière est en position rapprochée, entre lesdites platines de préhension. Une fois que les pênes de verrouillage des platines de préhension ont solidarisé ladite grappe aux berceaux mobiles, le système de clamage selon le premier mode de réalisation préférentiel est actionné, par exemple automatiquement par interaction d'au moins un desdits pênes de verrouillage avec ladite grappe, afin de libérer ladite grappe de ses bras de support. Ensuite, l'outil de préhension est en particulier capable d'effectuer ledit premier déplacement afin de positionner l'extrémité en Té du vérin dans ledit évidement de l'espace de verrouillage de la poutre transversale. Avantageusement, un espace entre les platines de préhension et lesdits berceaux permet ledit premier déplacement, et des pênes de verrouillage de longueur adaptée audit espace et susceptibles d'être rétractés dudit espace lors du déplacement de la grappe par l'outil de préhension selon ladite première direction sont aptes à autoriser ledit déplacement.

Par ailleurs, la présente invention est en particulier caractérisée en ce que lesdites traverses supérieures et inférieures comprennent chacune un moyen de guidage apte à guider chacune des traverses sur un rail, notamment disposé sur la navette, et prolongeable dans la cage de laminage, par exemple par des rails de démontage des cylindres intermédiaires, destinés à supporter un glissement ou un roulement de leurs empoises. Lesdites traverses comprennent par exemple, comme moyen de guidage, des galets ou des patins de guidage capables de se déplacer sur ledit rail prolongeable, dans la cage de laminage. Avantageusement, chaque rail de la navette destiné à coopérer avec le glissement ou roulement de la traverse est prolongeable par au moins un autre rail pouvant avantageusement être un desdits rails destinés au démontage des cylindres intermédiaires. Ainsi, chacune desdites traverses est capable de se déplacer sur lesdits rails afin de permettre au dispositif d'extraction de se mouvoir de la position de préhension à la position de parking sur ladite navette, et vice versa. Le déplacement entre lesdites positions de parking et de préhension est en particulier apte à être mis en oeuvre par l'organe de déplacement dudit dispositif d'extraction qui est capable d'agir sur l'entretoise solidarisant lesdites traverses supérieures et inférieures afin de les déplacer sur lesdits rails.

En outre, ledit dispositif d'extraction est en particulier logeable dans un compartiment de ladite navette adapté au changement d'au moins une grappe et/ou d'au moins un cylindre de soutien latéral de ladite cage de laminage par ledit dispositif d'extraction. Ledit compartiment comprend en particulier au moins une ouverture latérale et au moins une ouverture frontale, ladite ouverture frontale étant destinée à faire face à ladite cage de laminage lors de l'utilisation de l'installation de démontage, et à permettre un déplacement d'au moins une partie dudit dispositif d'extraction hors dudit compartiment. Ladite ouverture frontale permet par exemple auxdites traverses de se déplacer de la position de parking dans ledit compartiment à la position de préhension hors dudit compartiment. De plus, ledit compartiment est notamment apte à être desservi par ladite ouverture latérale par au moins un chariot porte-console mobile comportant une console supérieure et une console inférieure destinées chacune à servir de support à au moins une grappe, respectivement supérieure et inférieure, ou à au moins un cylindre de soutien latéral, respectivement supérieur et inférieur. Ledit chariot porte-console est éventuellement engageable ou retirable dudit compartiment par un mouvement parallèle à ladite seconde direction au travers de ladite ouverture latérale, ledit mouvement étant en particulier mis en oeuvre et apte à être commandé par un moyen de déplacement dudit chariot porte-console apte à engager le chariot dans ledit compartiment ou de l'y retirer. Ledit moyen de déplacement est en particulier automatique ou automatisable.

Avantageusement, ladite navette comprend éventuellement plusieurs compartiments consécutifs destinés, chacun, à loger un dispositif permettant l'extraction desdits cylindres et/ou grappes, par exemple ledit dispositif d'extraction permettant de changer un cylindre de soutien latéral et/ou une grappe, et au moins un autre dispositif d'extraction logeable dans un autre compartiment et capable d'extraire, par exemple, un cylindre de travail et/ou un cylindre intermédiaire. Ainsi, ladite navette comprend au moins un autre compartiment comprenant en particulier au moins une ouverture frontale, et apte à être disposé latéralement, selon ladite seconde direction, à côté dudit compartiment apte à être desservi par ledit chariot. En particulier, un premier autre compartiment juxtaposé audit compartiment apte à être desservi par ledit chariot, et un second autre compartiment, juxtaposé audit premier autre compartiment peuvent être montés côtes à côtes sur ladite navette afin de former un ensemble de trois compartiments consécutifs.

Préférentiellement, ledit compartiment apte à être desservi par ledit chariot porte-console comprend, notamment d'un même côté, au moins deux ouvertures latérales, chacune susceptible d'être desservie par un chariot porte-console tel que décrit précédemment. Ainsi, la méthode de changement des cylindres et/ou grappes selon l'invention est en particulier caractérisée par un déplacement selon une direction perpendiculaire à ladite première direction, d'un premier chariot porte-console, de préférence destiné au démontage desdits cylindres de soutien latéral et/ou grappes et comprenant au moins une console destinée au dépôt de la grappe ou du cylindre de soutien latéral, et d'un second chariot porte-console, de préférence destiné au montage desdits cylindres de soutien latéral et/ou grappes et comprenant au moins une console destinée au chargement d'une nouvelle grappe ou d'un nouveau cylindre de soutien latéral. Ledit premier chariot est notamment capable de se déplacer entre la position de parking et une position de dépôt des cylindres et/ou grappes usagés ou destinés à être remplacés ou réparés, et le second chariot est quant à lui capable de se déplacer entre la position intermédiaire de chargement et une position d'amenée de nouveaux cylindres et/ou grappes, par exemple neufs ou réparés. Ladite position de dépôt est par exemple située en dehors dudit compartiment, d'un côté d'une desdites ouvertures latérales, en vis-à-vis de ladite position de parking qui est située de l'autre côté de ladite ouverture latérale, et ladite position d'amenée est par exemple située en dehors dudit compartiment, d'un côté de l'autre desdites ouvertures, juxtaposée à ladite position de dépôt, et en vis-à-vis de ladite position intermédiaire située de l'autre côté de ladite autre ouverture.

En outre, afin d'assurer le démontage d'autres cylindres que le cylindre de soutien latéral, l'installation de démontage selon l'invention est en particulier caractérisée en ce que au moins ledit autre compartiment, par exemple ledit premier et ledit second autre compartiment, comprennent chacun ledit autre dispositif d'extraction capable de changer au moins un cylindre de travail et/ou au moins un cylindre intermédiaire. De préférence, ledit autre dispositif d'extraction a les caractéristiques suivantes:
- un corps allongé apte à être disposé en longueur, sensiblement horizontalement, selon ladite première direction dans ledit autre compartiment, par exemple, un premier corps allongé dans ledit premier autre compartiment et un second corps allongé dans ledit second autre compartiment;
- un organe de préhension d'un cylindre de travail comprenant deux mors fixes aptes à saisir chacun un tourillon d'un cylindre de travail est disposé à une extrémité dudit corps allongé et fixé à ce dernier, ledit organe de préhension étant en particulier susceptible de se déplacer hors dudit autre compartiment, par exemple, un premier organe de préhension équipant le premier corps allongé et apte à se déplacer hors du premier autre compartiment, et un second organe de préhension équipant le second corps allongé et apte à se déplacer hors du second autre compartiment;
- deux pênes actionnables chacun par un vérin, ou éventuellement actionnables par le même vérin, sont disposés dans ledit corps allongé, et peuvent sortir de celui-ci. Ils sont de plus capables de se verrouiller chacun sur une empoise du cylindre intermédiaire ou sur un organe rapporté à ladite empoise. A cette fin, une surface de ladite empoise ou dudit organe rapporté à ladite empoise permet un verrouillage avec ledit pêne dudit corps allongé, en formant par exemple une surface géométrique complémentaire à une forme géométrique dudit pêne;
- un organe de déplacement dudit corps allongé apte à déplacer ledit corps allongé, selon ladite première direction, ledit corps allongé pouvant en particulier être solidaire ou non des cylindres de travail, des cylindres intermédiaires et de ses empoises. Ledit organe de déplacement est dans tous les cas capable de déplacer ledit autre dispositif d'extraction lors d'un remplacement des cylindres de travail et/ou intermédiaires.

De préférence, lesdits deux mors fixes sont respectivement un mors supérieur disposé au-dessus d'un mors inférieur, aptes à saisir respectivement le tourillon du cylindre de travail supérieur et le tourillon du cylindre de travail inférieur, le mors supérieur étant réuni au mors inférieur par une entretoise permettant avantageusement une préhension simultanée du cylindre de travail inférieur et du cylindre de travail supérieur. L'installation de démontage selon l'invention est de plus caractérisée en ce que, notamment, chacun desdits deux mors comprend une mâchoire inférieure fixe proéminente par rapport à une mâchoire supérieure fixe, ladite mâchoire inférieure étant destinée à être glissée sous le tourillon du cylindre de travail lors d'un avancement du corps allongé dudit autre dispositif d'extraction en direction du cylindre de travail et ladite mâchoire supérieure fixe permettant un glissement dudit tourillon entre ladite mâchoire inférieure et ladite mâchoire supérieure lors dudit avancement dudit corps allongé.

A cette fin, lesdites mâchoires inférieures et supérieures disposent chacune, à leur entrée, de surfaces coniques à faible angle au centre facilitant une introduction des tourillons des cylindres de travail entre lesdites mâchoires. Afin de permettre cette introduction même en cas de différence d'altitude entre les tourillons et les mâchoires, lesdites mâchoires desdits deux mors sont de préférence montées sur un dispositif à déplacement vertical libre permettant un auto-alignement de la mâchoire et du tourillon. Le déplacement vertical libre est par exemple assuré par deux biellettes aptes à articuler une tête comprenant les mors supérieurs et inférieurs, ainsi que l'entretoise les solidarisant. Ladite tête est articulée sur un support comprenant une butée de position basse permettant de régler une position verticale minimale d'au moins un desdits mors. Préférentiellement, ledit support est monté mobile sur ledit organe allongé. A cette fin, un premier dispositif d'attache dudit support à l'organe allongé permet audit support de légèrement pivoter autour d'un axe de rotation sensiblement horizontal compris dans ledit corps allongé, et un second dispositif d'attache dudit support permet un pivotement dudit support autour dudit axe de rotation sensiblement horizontal, le premier et le second dispositifs d'attache assurant tous deux une solidarisation dudit support audit corps allongé, et ledit second dispositif d'attache comprenant par exemple un vérin d'attache. Grâce à cette configuration de tête verticalement mobile sur un support apte à légèrement pivoter par rapport audit corps allongé, après introduction des deux tourillons de cylindres entre lesdites mâchoires des deux mors, la tête du dispositif d'extraction subit grâce audit vérin d'attache un léger pivotement vers le haut dans un plan vertical autour dudit axe de rotation afin d'assurer un coincement temporaire de chacun des tourillons destinés à être pris en charge entre chacune des mâchoires destinées à les prendre en charge.

Pour assurer le changement d'au moins un cylindre de travail et/ou au moins un cylindre intermédiaire, la méthode de changement des cylindres et/ou grappes selon l'invention est en particulier caractérisée en ce que le démontage des cylindres de travail et/ou intermédiaires comprend les étapes suivantes:
- un déplacement selon ladite seconde direction dudit autre dispositif d'extraction dans une position de déchargement située dans un prolongement dudit passage;
- un déplacement, selon ladite première direction dudit autre dispositif d'extraction, de ladite position de déchargement à une position de préhension d'au moins un cylindre de travail et/ou d'au moins un cylindre intermédiaire;
- une prise en charge d'au moins un cylindre de travail et/ou d'au moins un cylindre intermédiaire. En particulier, une première prise en charge simultanée du cylindre de travail supérieur et respectivement du cylindre de travail inférieur par ladite mâchoire supérieure et respectivement inférieure, ladite première prise en charge simultanée comprenant une insertion d'un des tourillons de chacun des cylindres de travail dans une desdites mâchoires, par exemple, le tourillon du cylindre de travail supérieur situé du côté dudit autre dispositif d'extraction est apte à être pris en charge par la mâchoire supérieure de ladite tête, tandis que la mâchoire inférieure de ladite tête est apte à prendre en charge le tourillon du cylindre de travail inférieur situé du même côté que ledit autre dispositif d'extraction. De plus, ladite première prise en charge simultanée comprend en outre ledit léger pivotement vers le haut de ladite tête dudit autre dispositif d'extraction permettant de tenir lesdits cylindres de travail supérieur et inférieur en porte-à-faux par leurs tourillons respectifs en deux zones écartées l'une de l'autre verticalement. Par ailleurs, ladite prise en charge peut comprendre également une seconde prise en charge simultanée des cylindres intermédiaires supérieurs et inférieurs par verrouillage, au moyen desdits pênes dudit corps allongé, de l'empoise du cylindre intermédiaire supérieur située du côté dudit autre dispositif d'extraction au cours du changement de cylindres, ou d'un organe rapporté à ladite empoise, ou respectivement, de l'empoise du cylindre intermédiaire inférieur située du côté dudit autre dispositif d'extraction au cours du changement de cylindres, ou d'un organe rapporté à ladite empoise dudit cylindre intermédiaire inférieur, audit corps allongé. Ainsi, un premier pêne dudit corps allongé est apte à solidariser l'empoise du cylindre intermédiaire supérieur ou un organe rapporté à cette dernière audit corps allongé, et un second pêne dudit corps allongé est apte à solidariser l'empoise du cylindre intermédiaire inférieur ou un organe rapporté à cette dernière audit corps allongé, lesdites empoises étant les empoises situées à proximité dudit corps allongé lors d'un changement de cylindres;
- un retrait hors de la cage de laminage d'au moins un cylindre de travail et/ou au moins un cylindre intermédiaire par déplacement dudit corps allongé hors de ladite cage de laminage, chaque cylindre de travail destiné à être retiré de la cage étant tenu en porte-à-faux par ses tourillons et chaque cylindre intermédiaire destiné à être retiré étant verrouillé par une de ses empoises audit corps allongé au moyen dudit pêne dudit corps allongé. En particulier, ledit autre compartiment dudit autre dispositif d'extraction comprend une paire de rails supérieurs et respectivement une paire de rails inférieurs destinés à prolonger une première paire de rails de soutien des empoises du cylindre intermédiaire supérieur et respectivement une deuxième paire de rails de soutien des empoises des cylindres inférieurs. Les paires de rails supérieurs, inférieurs, et la première et seconde paire de rails étant tous destinés à assurer un guidage en translation des empoises des cylindres intermédiaires lors de l'extraction desdits cylindres intermédiaires hors de la cage de laminage jusqu'audit autre compartiment. Avantageusement, chacune des empoises desdits cylindres intermédiaires comprend des moyens de déplacement sur lesdits rails, comme par exemple des galets ou des patins.

Afin de mieux comprendre la présente invention, des exemples de réalisations et d'applications sont fournis à l'aide des figures suivantes :
- Figure 1: exemple de réalisation selon l'invention d'une installation de changement d'au moins un cylindre et/ou au moins une grappe d'une cage de laminage.
- Figure 2: exemple de réalisation selon l'invention dudit autre dispositif d'extraction capable de changer au moins un cylindre de travail et/ou au moins un cylindre intermédiaire.
- Figure 3: exemple de réalisation selon l'invention d'un organe de préhension dudit autre dispositif d'extraction.
- Figure 4: exemple de réalisation selon l'invention de pênes dudit autre dispositif d'extraction, destinés à une solidarisation/désolidarisation avec une empoise d'un cylindre intermédiaire.
- Figure 5: exemple de réalisation d'un dispositif d'extraction d'une installation de démontage selon l'invention.
- Figure 6: exemple d'étapes réalisables par l'installation de démontage selon l'invention et permettant un changement simultané de quatre grappes d'une cage de laminage.
- Figure 7: exemple d'étapes réalisables par l'installation de démontage selon l'invention et permettant un changement simultané de quatre cylindres de soutien latéral.
- Figure 8: exemple de réalisation dudit dispositif d'extraction comprenant au moins un berceau solidarisable à une grappe.
- Figure 9: exemple d'étapes réalisables par l'installation de démontage selon l'invention et permettant un changement simultané de deux grappes ou quatre cylindres de soutien latéral.
- Figure 10: exemple de réalisation d'une cage de laminage adaptée à l'installation de démontage selon l'invention.
- Figure 11: exemple de réalisation d'un dispositif d'extraction selon l'invention apte à se solidariser à une grappe.
- Figure 12: exemple de réalisation d'organes de clamage d'une cage de laminage adaptée à l'installation de démontage selon l'invention.
- Figure 13: exemple de réalisation d'un dispositif d'actionnement de pêne de verrouillage selon l'invention.

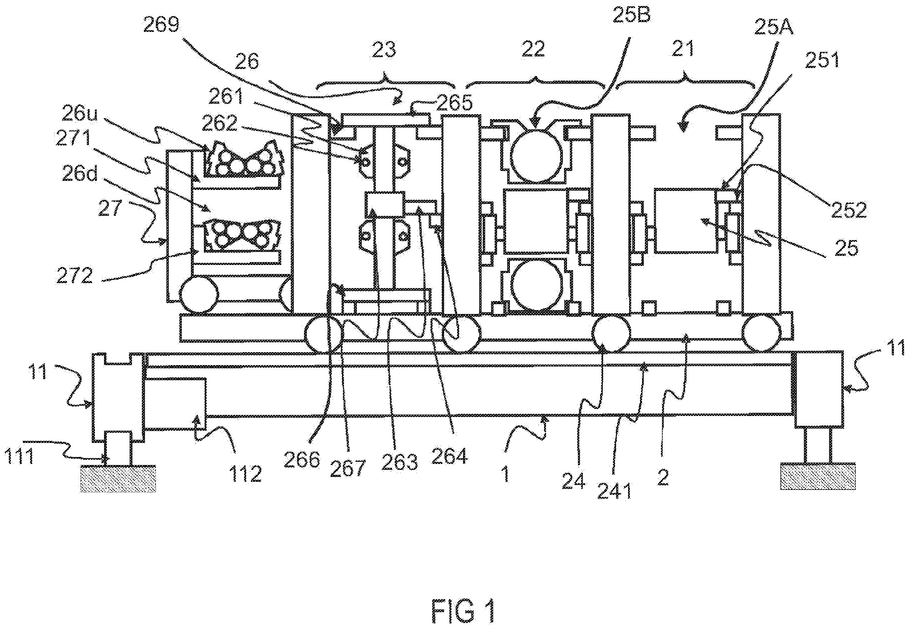

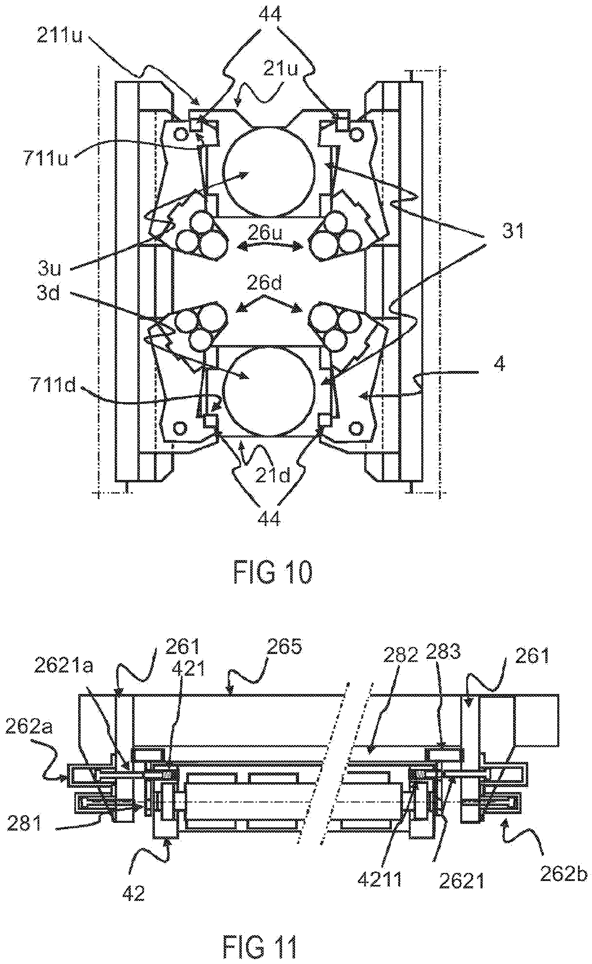

La Figure 1 montre un exemple de réalisation, selon l'invention, d'une installation de démontage d'au moins un cylindre et/ou au moins une grappe d'une cage de laminage sexto appuyée latéralement, notamment telle que décrite ultérieurement en Fig. 10. L'installation de démontage est adaptée au changement de cylindres et/ou de grappes de ladite cage de laminage et est capable de changer au moins un cylindre et/ou au moins une grappe de ladite cage de laminage.

L'installation de démontage selon l'invention comprend:
- un châssis 1 de manutention, en particulier positionnable du côté opérateur de l'installation de laminage, et comprenant des moyens de positionnement et de déplacement aptes à assurer son déplacement et son positionnement selon une première direction parallèle à un axe longitudinal de rotation des cylindres de travail lorsque ces derniers sont montés dans la cage de laminage. En particulier, ledit châssis 1 est apte à se déplacer au moyen de roues 11 circulant sur des rails 111, notamment rectilignes et susceptibles d'être disposés du côté opérateur de l'installation de laminage, parallèlement à ladite première direction;
- une navette 2 mobile capable de se déplacer sur ledit châssis selon au moins une seconde direction perpendiculaire à ladite première direction, par exemple au moyen de roues 24 aptes à circuler sur des rails 241 solidaires dudit châssis 1.

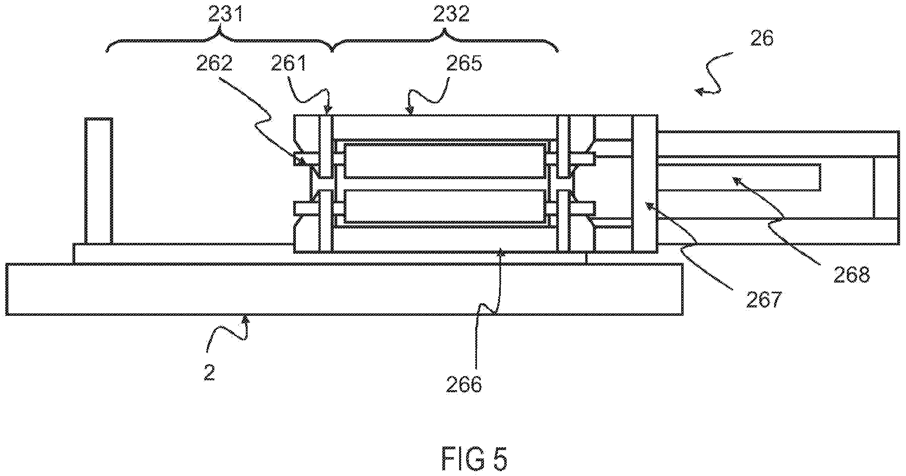

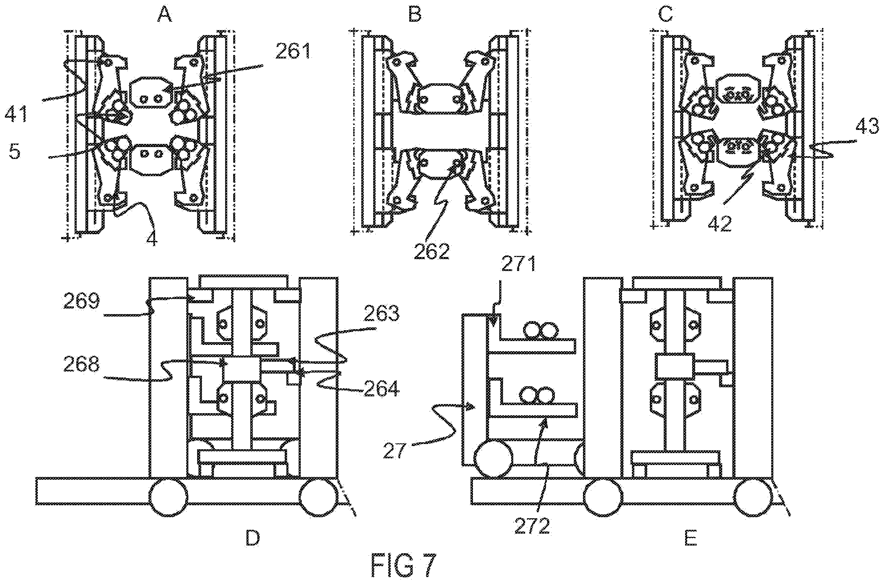

L'installation de démontage selon l'invention est de plus caractérisée en ce que ladite navette 2 comprend un dispositif d'extraction 26 capable de démonter de la cage de laminage, ou d'y monter, une ou plusieurs grappes et/ou un ou plusieurs cylindres de soutien latéral. Ledit dispositif d'extraction 26, décrit de manière plus détaillée en Figure 5, comprend:
- une traverse supérieure 265 pour le démontage d'au moins une grappe supérieure 26u et/ou au moins un cylindre de soutien latéral supérieur, solidarisée au moyen d'une entretoise 267 mobile, à une traverse inférieure 266 destinée au changement d'au moins une grappe inférieure 26d et/ou au moins un cylindre de soutien latéral inférieur, ladite traverse inférieure 266 étant disposée en-dessous de ladite traverse supérieure 265. En particulier, chacune desdites traverses comprend à chacune de ses extrémités une platine 261 de préhension mobile comprenant au moins un pêne 262 de verrouillage, lesdites platines 261 de préhension d'une même traverse, respectivement, les deux platines de préhension de la traverse supérieure 265 et les deux platines de préhension de la traverse inférieure 266, étant destinées à la préhension d'au moins une grappe et/ou d'au moins un cylindre de soutien latéral par actionnement dudit pêne 262 de verrouillage. En particulier, les deux platines équipant la traverse supérieure 265 sont chacune aptes à être solidarisées/désolidarisées, notamment simultanément et par actionnement d'au moins un de leurs pênes de verrouillage, à un cylindre de soutien latéral supérieur, ou à une grappe supérieure 26u, ou à deux cylindres de soutien latéral supérieurs, ou à deux grappes supérieures 26u, ou à un cylindre de soutien latéral supérieur et une grappe supérieure. Similairement, les deux platines équipant la traverse inférieure 265 sont chacune aptes à être solidarisées/désolidarisées, notamment simultanément et par actionnement d'au moins un de leurs pênes de verrouillage, à un cylindre de soutien latéral inférieur, ou à une grappe inférieure 26d, ou à deux cylindres de soutien latéral inférieurs, ou à deux grappes inférieures 26d, ou à un cylindre de soutien latéral inférieur et une grappe inférieure 26d. En particulier, chaque platine équipant une traverse supérieure, respectivement inférieure, comprend d'une part, deux pênes de verrouillage de grappe destinés au verrouillage d'une grappe supérieure 26u, respectivement inférieure 26d, soit un premier pêne de verrouillage de grappe supérieure, respectivement inférieure, destiné à verrouiller la grappe supérieure 26u, respectivement inférieure 26d, située latéralement d'un côté du cylindre de travail supérieur, respectivement inférieur, et un second pêne de verrouillage de grappe supérieure, respectivement inférieure, capable de verrouiller la grappe supérieure 26u, respectivement inférieure 26d, située latéralement de l'autre côté dudit cylindre de travail supérieur, respectivement inférieur, et d'autre part, deux pênes de verrouillage de cylindre de soutien latéral supérieur, respectivement inférieur, soit un premier pêne de verrouillage de cylindre de soutien latéral supérieur, respectivement inférieur, destiné à verrouiller le cylindre de soutien latéral supérieur, respectivement inférieur, situé latéralement d'un côté du cylindre de travail supérieur, respectivement inférieur, et un second pêne de verrouillage de cylindre de soutien latéral supérieur, respectivement inférieur, capable de verrouiller le cylindre de soutien latéral supérieur, respectivement inférieur, situé latéralement de l'autre côté dudit cylindre de travail supérieur, respectivement inférieur. Préférentiellement, chacune desdites traverses comprend des galets ou des patins de guidage (non représentés) aptes à se déplacer sur des rails 269 situés dans la navette, solidaires à cette dernière, et prolongeable, dans la cage de laminage, par d'autres rails pouvant, de manière particulièrement avantageuse, être des rails destinés au changement des cylindres intermédiaires;
- un organe de déplacement 268 dudit dispositif d'extraction apte à déplacer ledit dispositif d'extraction 26 selon ladite première direction par action sur ladite entretoise solidaire de la traverse supérieure et de la traverse inférieure. En particulier, ladite entretoise 267 peut être mécaniquement liée audit organe de déplacement 268 afin que ce dernier puisse assurer le déplacement simultané de la traverse supérieure et inférieure, et donc du dispositif d'extraction 26, par déplacement de ladite entretoise. Préférentiellement, ledit organe de déplacement 268 permet un positionnement et un déplacement dudit dispositif d'extraction 26 entre une position de préhension dans la cage de laminage adaptée à la prise en charge d'au moins une grappe et/ou d'au moins un cylindre de soutien latéral, une position de parking 232 située sur ladite navette, hors de la cage de laminage, et une position intermédiaire 231, située sur ladite navette et comprise entre ladite position de parking et la position de préhension, permettant par exemple une prise en charge d'au moins une grappe et/ou cylindre de travail neuf ou réparé par le dispositif d'extraction 26. Cet organe de déplacement peut être, à titre d'exemple, un pignon 263 entraîné par un moteur (non représenté) et engrenant sur une crémaillère 264, ainsi que présenté en Figure 1 ou 7.

Avantageusement, ladite navette 2 décrite en Figure 1 comprend notamment plusieurs compartiments consécutifs:
- un compartiment 23 apte à loger ledit dispositif d'extraction 26 d'au moins une grappe et/ou d'au moins un cylindre de soutien latéral. Avantageusement, ledit organe de déplacement dudit dispositif d'extraction est en particulier apte à déplacer au moins une partie dudit dispositif d'extraction de la position de parking ou intermédiaire dans ledit compartiment 23 sur ladite navette, à une position de préhension hors dudit compartiment 23 dans ladite cage de laminage, notamment selon une direction de déplacement perpendiculaire au sens de défilement de la bande, afin d'assurer, lors d'un changement d'un cylindre ou d'une grappe, l'avancement et respectivement le retrait de ladite partie dudit dispositif d'extraction dans, et respectivement hors de la cage de laminage;
- un premier autre compartiment 21 apte à loger un premier autre dispositif d'extraction 25A capable de changer au moins un cylindre de travail et/ou au moins un cylindre intermédiaire. Lors de l'utilisation de l'installation de démontage, ledit premier autre compartiment 21 est par exemple vide en attente d'une extraction d'un ou plusieurs cylindres de travail ou de cylindres intermédiaires,
- un deuxième autre compartiment 22 apte à loger un second autre dispositif d'extraction 25B similaire audit premier autre dispositif d'extraction et capable, lui aussi, de remplacer au moins un cylindre de travail et/ou au moins un cylindre intermédiaire. Lors de l'utilisation de l'installation de démontage, ledit deuxième autre compartiment 22 est par exemple équipé d'un jeu de cylindres de travail ou de cylindres intermédiaires neufs prêts à être montés en remplacement des cylindres de travail ou intermédiaires usagés remplaçables par ledit premier autre dispositif d'extraction.

Selon un mode de réalisation préférentiel, latéralement au compartiment 23 apte à loger le dispositif d'extraction 26, au moins un chariot porte-console 27 comportant une console supérieure 271 et une console inférieure 272, permettant chacune un dépôt d'au moins une grappe et/ou d'au moins un cylindre de soutien latéral, est engageable dans le compartiment 23, ou retirable dudit compartiment 23, par un mouvement parallèle au défilement de la bande, afin de prendre en charge respectivement au moins une grappe et/ou au moins un cylindre de soutien latéral, notamment au moins une grappe supérieure et/ou au moins un cylindre de soutien latéral supérieur sur la console supérieure 271, et respectivement au moins une grappe inférieure et/ou au moins un cylindre de soutien latéral inférieur sur la console inférieure 272.

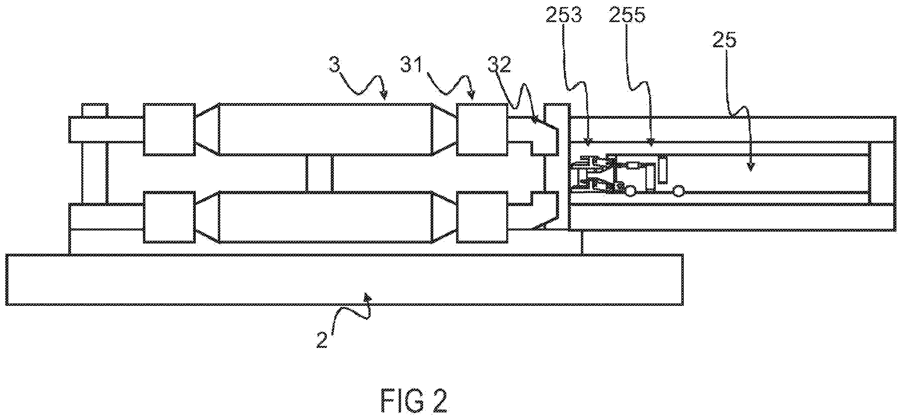

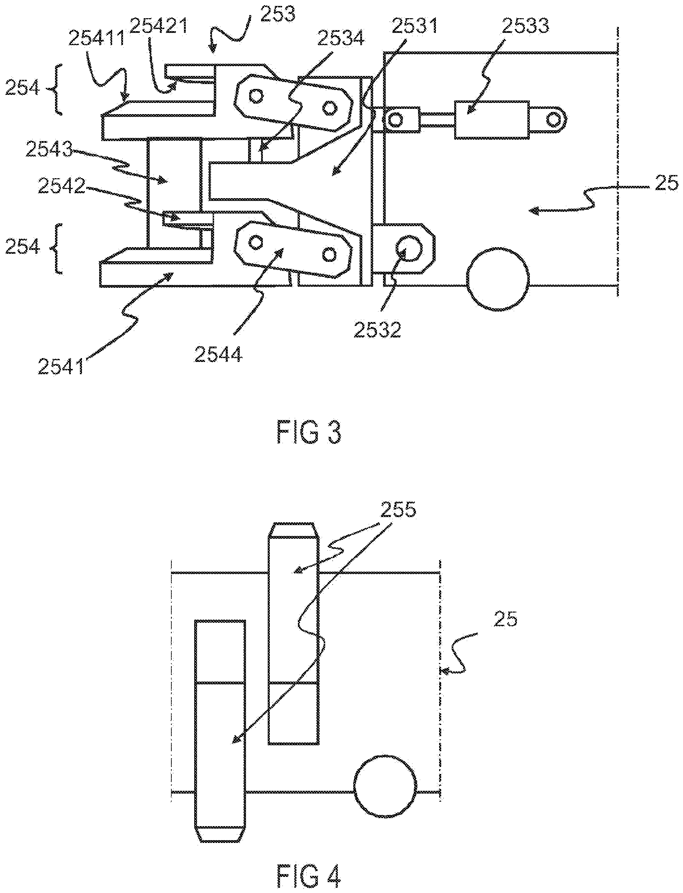

Le premier et le second autre dispositif d'extraction 25A, 25B sont en particulier identiques et comprennent, selon l'invention et comme illustré dans les Figures 2 à 4:
- un corps allongé 25 apte à être disposé en longueur, sensiblement horizontalement, selon ladite première direction dans ledit autre compartiment, par exemple, un premier corps allongé dans ledit premier autre compartiment et un second corps allongé dans ledit second autre compartiment;
- un organe de préhension 253 d'un cylindre de travail, notamment capable de saisir, au moyen d'au moins un mors fixe au moins un cylindre de travail, ou, de manière préférentielle, comprenant deux mors fixes capables chacun de saisir simultanément les deux cylindres de travail par un de leur tourillon. Un exemple d'organe de préhension selon l'invention est décrit de manière détaillée en Figure 3.
- deux pênes 255 montés dans ledit corps allongé sont actionnables chacun par un même vérin ou par un vérin différent, lesdits pênes étant aptes à verrouiller ou solidariser des empoises des cylindres intermédiaires ou des organes rapportés auxdites empoises avec ledit corps allongé. Un exemple de pênes selon l'invention est décrit en Figure 4.
- un organe de déplacement dudit corps allongé 25 capable de déplacer, notamment perpendiculairement au sens de défilement de la bande, ledit corps allongé 25 d'une position située à l'intérieure de son compartiment, à une position située à l'extérieure dudit compartiment et permettant, notamment lors de l'utilisation de l'installation de démontage, audit organe de préhension de saisir au moins un des cylindres de travail et/ou de se solidariser à au moins un cylindre intermédiaire. En particulier, un premier organe de déplacement permet de déplacer ledit premier autre dispositif d'extraction par rapport à son compartiment, et un second organe de déplacement permet de déplacer ledit second autre dispositif d'extraction par rapport à son compartiment. Cet organe de déplacement peut être, à titre d'exemple et comme illustré en Fig. 1, un pignon 251 entrainé par un moteur (non représenté) et engrenant sur une crémaillère 252.

La Figure 3 décrit un exemple de réalisation d'un organe de préhension 253 d'au moins un cylindre de travail selon l'invention. Cet organe de préhension 253 comprend en particulier deux mors 254 fixes, respectivement, un mors supérieur destiné à saisir un tourillon d'un cylindre de travail supérieur, et un mors inférieur destiné à saisir un tourillon d'un cylindre de travail inférieur, réunis par une entretoise 2543 permettant une préhension simultanée du cylindre de travail inférieur et du cylindre de travail supérieur par saisissement d'un de leur tourillon respectif par chacun desdits mors 254 fixes. Chacun des deux mors 254 comprend à cette fin une mâchoire inférieure 2541 fixe proéminente destinée à être glissée sous le tourillon lors d'une avance dudit corps allongé 25 en direction dudit tourillon, et une mâchoire supérieure 2542 fixe sous laquelle se glisse le tourillon jusqu'à la fin de l'avance dudit corps allongé 25.

Les mâchoires inférieures 2541 et respectivement supérieures 2542 disposent chacune, à leur entrée, de surfaces coniques inférieures 25411, et respectivement supérieures 25421, à faible angle au centre facilitant une introduction du tourillon du cylindre de travail dans la mâchoire. Afin de permettre cette introduction même en cas de différence d'altitude entre le tourillon du cylindre de travail supérieur et la mâchoire supérieure, et le tourillon du cylindre de travail inférieur et la mâchoire inférieure, lesdites mâchoires sont avantageusement montées sur un dispositif à déplacement vertical libre permettant un auto-alignement vertical de chacune des mâchoires avec leur tourillon respectif. Par exemple, deux biellettes 2544 sont capables d'articuler une tête 253, comprenant lesdits mors et l'entretoise les solidarisant ensemble, sur un support 2531 comprenant une butée de position basse 2534 apte à limiter une position verticale minimale de la tête par rapport audit support, ce dernier étant monté mobile sur ledit corps allongé. Afin de changer les cylindres de travail, après introduction simultanée du tourillon du cylindre de travail supérieur dans les mâchoires du mors supérieur et du tourillon du cylindre de travail inférieur dans les mâchoires du mors inférieur, le support 2531 de la tête 253 subit grâce à un vérin d'attache 2533 un léger pivotement vers le haut, dans un plan vertical, autour d'un axe 2532 de rotation, afin d'assurer un coincement temporaire des tourillons entre les mâchoires, et permettant ainsi une saisie en porte-à-faux des cylindres de travail par leurs tourillons.

La Figure 4 décrit un exemple de pênes 255 selon l'invention, montés dans ledit corps allongé 25, destinés à l'extraction des cylindres intermédiaires, et fonctionnant chacun comme un vérin. Chacun de ces pênes 255 est en particulier capable de verrouiller ou solidariser une empoise d'un cylindre intermédiaire avec ledit corps allongé par insertion dudit pêne dans un logement de ladite empoise ou d'un organe rapporté à ladite empoise, ledit logement ayant en particulier une géométrie complémentaire audit pêne. En particulier lesdits deux pênes 255 sont respectivement un pêne supérieur destiné à solidarisé une des empoise du cylindre intermédiaire supérieur audit corps allongé, et un pêne inférieur destiné à solidariser une des empoises du cylindre intermédiaire inférieur audit corps allongé.

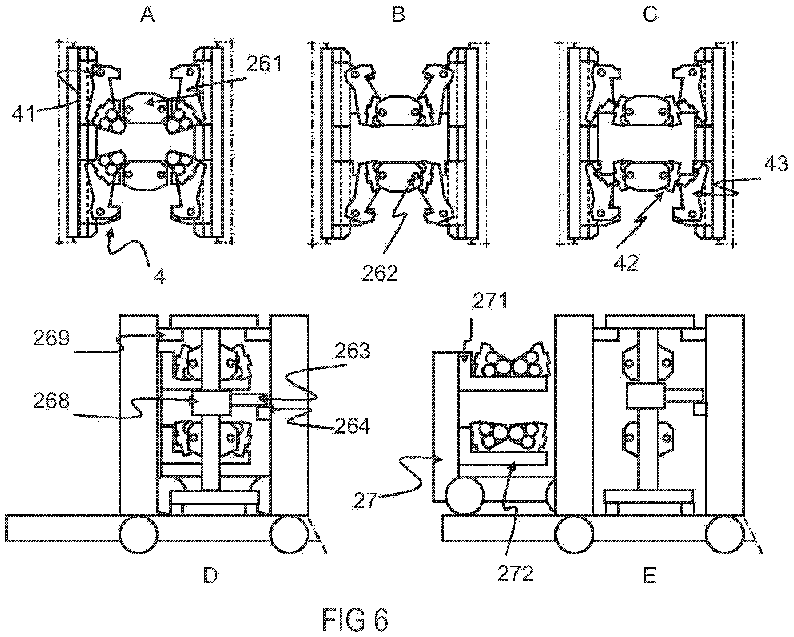

La Figure 6 décrit un ensemble d'étapes réalisables par l'installation de démontage selon l'invention, et permettant en particulier un changement simultané de quatre grappes d'une cage de laminage:

Dans un premier temps, les cylindres de travail et intermédiaires sont extraits de la cage de laminage par ledit autre dispositif d'extraction selon l'invention. Ensuite, les organes d'appuis latéraux 4 sont pivotés autour de leurs axes de pivotement 41 sous l'action de vérins (non représentés) vers une position écartée comme indiqué sur la figure 6A. Dès lors, le dispositif d'extraction selon l'invention est apte à avancer vers la cage à partir de sa position de parking 232 (cf. Fig. 5) jusqu'à la position de préhension dans la cage de laminage. En particulier, ledit organe de déplacement dudit dispositif d'extraction est capable de positionner ce dernier de manière centrée par rapport à la cage de laminage afin de permettre à chaque organe d'appui latéral de pivoter de la position écartée à une position rapprochée permettant une insertion de sa grappe entre deux platines 261 de préhension, comme indiqué sur la figure 6B. De cette façon, les platines de préhension de chaque traverse sont capables de prendre en charge deux grappes.

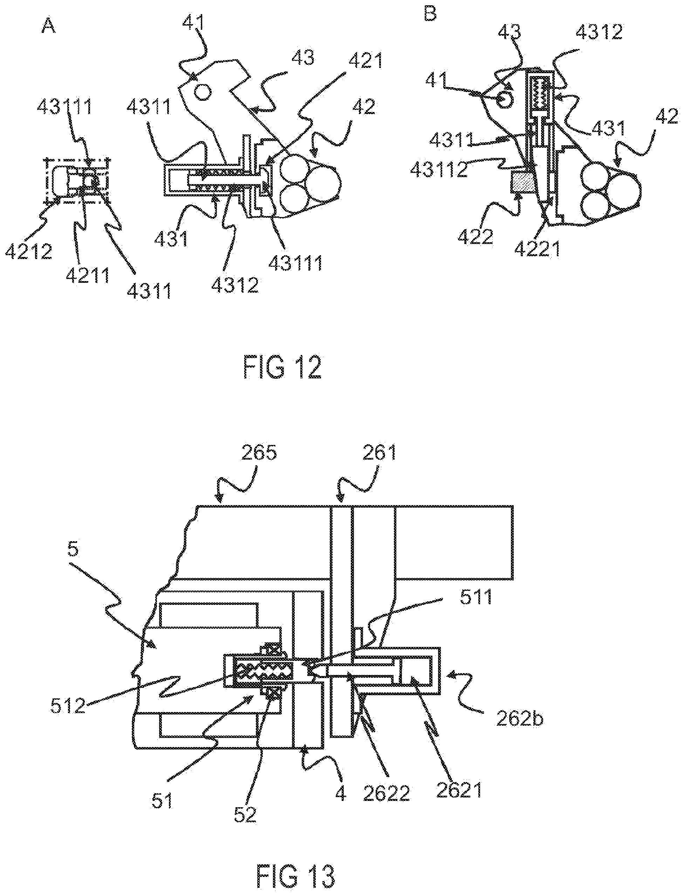

Dans un deuxième temps, après ce pivotement en position rapprochée, chaque poutre transversale 42 de chaque grappe est prise en charge par deux pênes 262 de verrouillage de grappe portés par les platines 261 de préhension d'une traverse, soit un pêne de verrouillage de grappe porté par la platine de préhension montée à une extrémité de la traverse et étant apte à verrouiller ou solidariser une extrémité de la poutre transversale 42 avec ladite platine 261, par exemple par insertion dudit pêne de verrouillage dans la cavité de la poutre transversale 42, et un second pêne de verrouillage de grappe porté par la platine de préhension montée à l'autre extrémité de la traverse et étant apte à verrouiller ou solidariser l'autre extrémité de la poutre transversale avec ladite platine de préhension montée à l'autre extrémité de la traverse, par exemple par insertion dudit pêne de verrouillage dans l'autre cavité de la poutre transversale. Une fois les platines solidarisées à la grappe, des organes de clamage, assurant chacun, pour un bras de support 43 d'une poutre transversale 42, la solidarisation de ladite poutre transversale 42 avec ledit bras de support 43, sont relâchés, en particulier simultanément, afin de permettre l'extraction des grappes par le dispositif d'extraction. De manière préférentielle, le relâchement des organes de clamage est apte à être commandé mécaniquement, électroniquement, ou électro-mécaniquement par un système de commande actionnable par interaction d'au moins un desdits pêne de verrouillage de grappe avec la grappe. Ainsi, la solidarisation des platines de préhension d'une traverse à une grappe peut entraîner automatiquement, via ledit système de commande, le relâchement, ou désolidarisation, de la grappe de ses bras de support. Des exemples de réalisation desdits organes de clamage selon l'invention sont donnés en Figure 13.

Dans un troisième temps, les bras de support 43 désolidarisés de la poutre transversale 42 sont pivotés, en particulier simultanément, en position écartée afin de laisser un libre passage pour le dispositif d'extraction hors de la cage, comme indiqué sur la figure 6C. Le dispositif d'extraction est ensuite déplacé par ledit organe de déplacement jusqu'en position de parking 232 sur la navette. Les quatre grappes portées par ledit dispositif d'extraction, i.e. les deux grappes supérieures prises en charges par les deux platines de la traverse supérieure, et les deux grappes inférieures prises en charge par les deux platines de la traverse inférieure, sont ainsi extraites de la cage de laminage.

Dans un quatrième temps, et comme indiqué sur la figure 6D, un premier chariot porte-console 27 de dépose pouvant avantageusement être disposé latéralement par rapport au compartiment 23 de navette (cf. Fig. 1) comprenant ledit dispositif d'extraction, et comportant une console supérieure 271 et une console inférieure 272, est engageable dans ce compartiment 23 de navette par un mouvement parallèle au défilement de la bande, afin de prendre en charge respectivement les deux grappes supérieures sur la console supérieure 271, et les deux grappes inférieures sur la console inférieure 272, lesdites grappes étant en particulier automatiquement relâchées sur des supports amovibles équipant chacune desdites consoles, chaque support amovible étant en particulier destiné à supporter au moins une desdites grappes sur la console qu'il équipe, lors du dépôt de ladite grappe par ledit dispositif d'extraction.

Ledit premier chariot porte-console 27 et ses consoles 271, 272 portant chacune deux grappes peut alors être extrait du compartiment de la navette, rendant libre le dispositif d'extraction pour une prise en charge de nouvelles grappes, afin de les introduire dans la cage de laminage en lieu et place de celles précédemment démontées. A cette fin, l'organe de déplacement déplace le dispositif d'extraction en direction de la cage de laminage, de la position de parking à la position intermédiaire 231 (cf. Fig. 1). Avantageusement, ladite position intermédiaire est apte à être desservie par un second chariot porte-console comprenant, de manière identique audit premier chariot porte-console, une console supérieure et une console inférieure destinée à porter chacune deux nouvelles grappes. Le second chariot porte-console est engageable dans le compartiment 23 par un mouvement parallèle au défilement de la bande afin de mettre les deux nouvelles grappes supérieures portées par sa console supérieure et les deux nouvelles grappes inférieures portées par sa console inférieure dans une position permettant leur prise en charge par le dispositif d'extraction.

Dans un cinquième temps, après prise en charge desdites grappes par ledit dispositif d'extraction, ce dernier est déplacé par ledit organe de déplacement de la position intermédiaire 231 à la position de préhension dans la cage de laminage. Chacun des bras de support 43 pivote, en particulier simultanément, de la position écartée à la position rapprochée en s'insérant entre deux platines 261 de préhension jusqu'à un contact avec les poutres transversales 42 des nouvelles grappes. Les organes de clamage sont ensuite actionnables, en particulier automatiquement, dès que le contact est réalisé, afin d'assurer une solidarisation des poutres transversales des nouvelles grappes sur leurs bras de support respectifs. Chaque pêne 262 de verrouillage de grappe de chaque platine 261 de préhension est relâché. En particulier, lors de la solidarisation de la nouvelle grappe à ses bras de support, l'actionnement d'au moins un des organes de clamage de la nouvelle grappe, en particulier une position de la tige d'un vérin d'un desdits organes de clamage de la grappe, est capable d'entrainer automatiquement le déverrouillage, ou désolidarisation, des pênes de verrouillage de grappe de ladite nouvelle grappe. A cette fin, le système de commande est en particulier capable d'identifier un état binaire de solidarisation dudit organe de clamage (i.e. un premier état correspondant au système de clamage solidaire à la poutre transversale et un second état correspondant au système de clamage non solidaire à la poutre transversale, i.e. libéré de cette dernière), par exemple par interaction avec ledit vérin, ou encore au moyen d'une mesure d'une position du vérin dudit organe de clamage. Une fois lesdites nouvelles grappes solidarisées à leurs bras de support, les quatre organes d'appuis latéraux 4 reconstitués peuvent alors pivoter en position écartée afin de laisser le libre passage au dispositif d'extraction qui est alors apte à être déplacé par l'organe de déplacement en position de parking 232 dans le compartiment 23 de la navette.

La Figure 7 décrit un ensemble d'étapes réalisables par l'installation de démontage selon l'invention, et permettant en particulier un changement simultané de quatre cylindres de soutien latéral:
Dans un premier temps, les cylindres de travail et intermédiaires sont extraits de la cage de laminage par ledit autre dispositif d'extraction selon l'invention. Ensuite, les organes d'appuis latéraux 4 sont pivotés autour de leurs axes de pivotement 41 respectifs sous l'action de vérins (non représentés) vers une position écartée comme indiqué sur la figure 7A de sorte à libérer un passage pour le dispositif d'extraction. Dès lors, le dispositif d'extraction selon l'invention est apte à avancer vers la cage de laminage à partir de sa position de parking 232 jusqu'à la position de préhension dans la cage de laminage. En particulier, ledit organe de déplacement dudit dispositif d'extraction est capable de centrer ce dernier par rapport à la cage de laminage de manière à permettre à chaque organe d'appui latéral de pivoter de la position écartée à une position rapprochée permettant une insertion de sa grappe entre deux platines 261 de préhension, comme indiqué sur la figure 7B. De cette façon, les platines de préhension de chaque traverse sont capables de prendre en charge deux cylindres de soutien latéral d'un même cylindre de travail.

Dans un deuxième temps, après ce pivotement en position rapprochée, chaque cylindre de soutien latéral 5 de chaque grappe est pris en charge par deux pênes 262 de verrouillage de cylindre de soutien latéral portés par les platines 261 de préhension d'une traverse, soit un pêne de verrouillage de cylindre de soutien latéral porté par la platine de préhension montée à une extrémité de la traverse et apte à verrouiller ou solidariser une extrémité dudit cylindre de soutien latéral à ladite platine, et un second pêne de verrouillage de cylindre de soutien latéral porté par la platine de préhension montée à l'autre extrémité de la traverse et apte à verrouiller ou solidariser l'autre extrémité dudit cylindre de soutien latéral à ladite platine montée à l'autre extrémité de la traverse. En particulier, le verrouillage du cylindre de soutien latéral au moyen desdits pênes de verrouillage de cylindre de soutien latéral est susceptible d'actionner automatiquement un système de verrouillage dudit cylindre de soutien latéral, qui est capable d'actionner simultanément au verrouillage dudit cylindre de soutien latéral par au moins un pêne de verrouillage de cylindre de soutien latéral, un déverrouillage dudit cylindre de soutien latéral d'avec sa grappe.

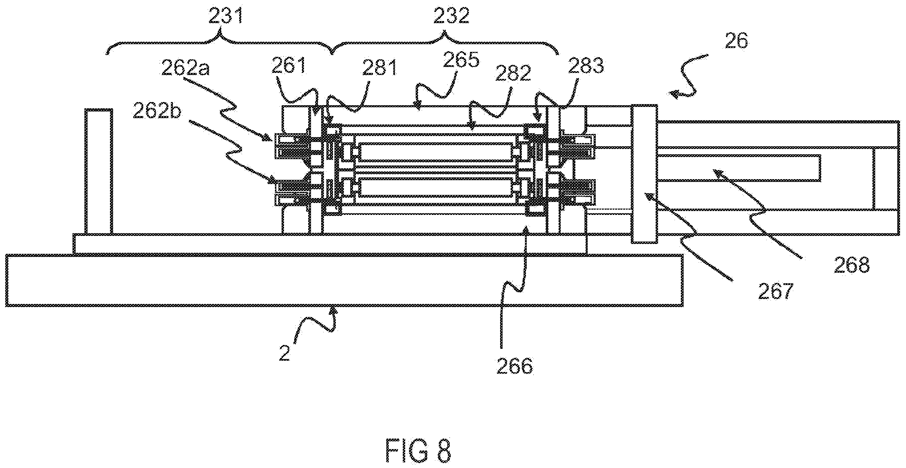

Dans un troisième temps, les bras de support 43 de chaque grappe sont pivotés, en particulier simultanément, en position écartée afin de laisser un libre passage pour le dispositif d'extraction hors de la cage, comme indiqué sur la figure 8C. Le dispositif d'extraction, supportant dès lors les quatre cylindres de soutien latéral de la cage de laminage, est ensuite déplacé par ledit organe de déplacement jusqu'en position de parking 232 sur la navette. Les quatre cylindres de soutien latéral, i.e. les deux cylindres de soutien latéral supérieurs pris en charge par les deux platines de la traverse supérieure, et les deux cylindres de soutien latéral inférieurs pris en charge par les deux platines de préhension de la traverse inférieure, sont ainsi extraits de la cage de laminage.

Dans un quatrième temps, et comme indiqué sur la figure 8D, le premier chariot porte-console 27 de dépose dudit compartiment 23 de navette, et comportant la console supérieure 271 et la console inférieure 272, est engageable dans ce compartiment de navette par ledit mouvement parallèle au défilement de la bande, afin de prendre en charge respectivement les deux cylindres de soutien latéral supérieurs sur la console supérieure 271, et les deux cylindres de soutien latéral inférieurs sur la console inférieure 272, lesdits cylindres de soutien latéral étant en particulier automatiquement relâchés sur des supports amovibles équipant chacune desdites consoles, chacun desdits supports amovibles étant en particulier capable de supporter au moins un cylindre de soutien latéral sur la console que ledit support amovible équipe, du dépôt par ledit dispositif d'extraction dudit cylindre de soutien latéral.

Ledit premier chariot porte-console 27 et ses consoles 271, 272 portant chacune deux cylindres de soutien latéral peut alors être extrait du compartiment de la navette, rendant libre le dispositif d'extraction pour une prise en charge de nouveaux cylindres de soutien latéral, afin de les introduire dans la cage de laminage en lieu et place de ceux précédemment démontés. A cette fin, l'organe de déplacement déplace le dispositif d'extraction en direction de la cage de laminage, de la position de parking à la position intermédiaire 231. Avantageusement, ladite position intermédiaire est apte à être desservie par le second chariot porte-console dont la console supérieure et la console inférieure sont aptes à porter chacune deux nouveaux cylindres de soutien latéral. Le second chariot porte-console est engageable dans le compartiment 23 de navette par ledit mouvement parallèle au défilement de la bande afin de mettre les deux nouveaux cylindres de soutien latéral supérieurs portés par sa console supérieure et les deux nouveaux cylindres de soutien latéral inférieurs portés par sa console inférieure dans une position permettant leur prise en charge par le dispositif d'extraction.

Dans un cinquième temps, le dispositif d'extraction est déplacé par ledit organe de déplacement de la position intermédiaire à la position de préhension susceptible d'être centrée par rapport à la cage de laminage. Chacun des bras de support 43 de chaque grappe pivote, en particulier simultanément, de la position écartée à la position rapprochée en s'insérant entre deux platines 261 de préhension jusqu'à une position permettant le verrouillage du cylindre de soutien latéral avec sa grappe. Les pênes de verrouillage de chaque cylindre de soutien latéral sont ensuite relâchés simultanément, entrainant le déverrouillage simultané de chaque cylindre de soutien latéral d'avec ses platines de préhension. Ce déverrouillage actionne simultanément le système de verrouillage dudit cylindre de soutien latéral qui est capable de solidariser le cylindre de soutien latéral à sa grappe simultanément à sa désolidarisation de ses platines de préhension. Les quatre organes d'appuis latéraux 4 reconstitués peuvent alors pivoter en position écartée afin de laisser le libre passage au dispositif d'extraction qui est alors déplacé par l'organe de déplacement en position de parking 232 dans le compartiment de la navette.

La Figure 8 présente un exemple de réalisation d'un dispositif d'extraction 26 susceptible d'équiper la navette 2 selon l'invention. Comme précédemment, ledit dispositif d'extraction comprend la traverse supérieure 265 solidarisée au moyen de l'entretoise 267 mobile à la traverse inférieure 266, l'organe de déplacement 268, capable de déplacer ledit dispositif d'extraction, de préférence dans et hors de la cage de laminage, et notamment entre la position de parking 232 et la position intermédiaire 231. Chaque traverse, supérieure ou inférieure, est munie à chacune de ses extrémités d'une platine 261 de préhension comprenant au moins quatre pênes de verrouillage: en particulier deux pênes de verrouillage de grappe 262a et deux pênes de verrouillage de cylindre de soutien latéral 262b. Chaque pêne de verrouillage de grappe 262a d'une platine de préhension située à une extrémité d'une traverse est destiné à coopérer avec un autre pêne de verrouillage de grappe d'une autre platine de préhension située à l'autre extrémité de ladite traverse afin de permettre la solidarisation/désolidarisation d'une grappe avec ledit dispositif d'extraction. Egalement, chaque pêne de verrouillage de cylindre de soutien latéral 262b d'une platine de préhension située à une extrémité d'une traverse est destiné à coopérer avec un autre pêne de verrouillage de cylindre de soutien latéral 262b d'une autre platine de préhension située à l'autre extrémité de ladite traverse afin de permettre la solidarisation/désolidarisation d'un cylindre de soutien latéral 262b avec ledit dispositif d'extraction. Ladite coopération entre pênes de verrouillage permet notamment leur actionnement simultané.

Préférentiellement, chaque platine 261 de préhension est capable de coopérer avec un berceau 281, 283 de préhension mobile et de lui servir de support. Ledit berceau est en particulier positionnable entre ladite platine de préhension et ladite grappe lors du montage/démontage d'une grappe ou d'un cylindre de soutien latéral et comprend de plus un organe de supportage capable de prendre appui sur ladite platine de préhension, tout en permettant un mouvement relatif dudit berceau par rapport à ladite platine, ainsi qu'une désolidarisation possible dudit berceau de la platine avec laquelle il coopère. En particulier, une poutre support 282 solidarise un premier berceau 281 avec un second berceau 283. Ainsi, la poutre support 282 est munie à une de ses extrémités dudit premier berceau 281, et à l'autre de ses extrémités, dudit second berceau 283 afin de former un outil de préhension. Cet outil de préhension a notamment une forme de U à l'endroit lorsqu'il équipe une traverse inférieure, et une forme symétrique, i.e. de U à l'envers, lorsqu'il équipe une traverse supérieure. Avantageusement, ledit outil de préhension est en particulier capable de coopérer avec lesdites platines de préhension lors de la solidarisation/désolidarisation d'une grappe ou d'un cylindre de soutien latéral avec ledit dispositif d'extraction. Ainsi, la traverse supérieure 265 et la traverse inférieure 266 sont chacune aptes à être équipées par un desdits outils de préhension comprenant ladite poutre support 282 munie d'un berceau 281, 283 à chacune de ses extrémités.

Préférentiellement, chaque outil de préhension comprend des moyens de déplacement permettant de déplacer ledit outil de préhension perpendiculairement à l'axe longitudinal de la traverse qu'il est destiné à équiper et des moyens de stabilisation de ladite grappe, par exemple des doigts de stabilisation réglables positionnés sur ladite poutre support et susceptibles d'accoster ladite grappe. De plus, chaque outil de préhension est en particulier apte à être désolidarisé de la traverse supérieure ou inférieure qu'il équipe, en restant notamment solidarisé à une grappe lors du dépôt de cette dernière hors de la cage de laminage sur une console de dépôt. A cette fin, chaque poutre transversale de chaque grappe peut en particulier comprendre à chacune de ses extrémités longitudinales, ladite cavité destinée à coopérer avec ledit pêne de verrouillage de grappe de la platine de préhension. Cette cavité permet la solidarisation de la grappe avec ses platines de préhension, par exemple par insertion du pêne de verrouillage de grappe 262a de chaque platine dans sa cavité respective, ou encore par pression du pêne de verrouillage de grappe sur un poussoir à ressort situé dans ladite cavité et dont une extrémité est susceptible de sortir hors de ladite cavité. Egalement, ladite cavité permet une désolidarisation des platines de préhension de ladite grappe, par exemple par retrait dudit pêne de verrouillage de grappe 262a hors de la-dite cavité, ou par relâchement de la pression exercée par le pêne de verrouillage de grappe sur ledit poussoir à ressort. Avantageusement, ledit poussoir à ressort permet en particulier une solidarisation de la grappe avec les berceaux 281, 283 dudit outil de préhension lors dudit relâchement de la pression exercée par ledit pêne de verrouillage de grappe 262a en direction de ladite cavité. En effet, ladite pression exerçable par ledit pêne de verrouillage de grappe contre ledit poussoir à ressort est apte à comprimer ledit poussoir à ressort, et le relâchement de la pression exerçable par ledit pêne de verrouillage de grappe contre ledit poussoir à ressort est apte à détendre ledit poussoir à ressort qui est dès lors capable de verrouiller ladite grappe audit outil de préhension.

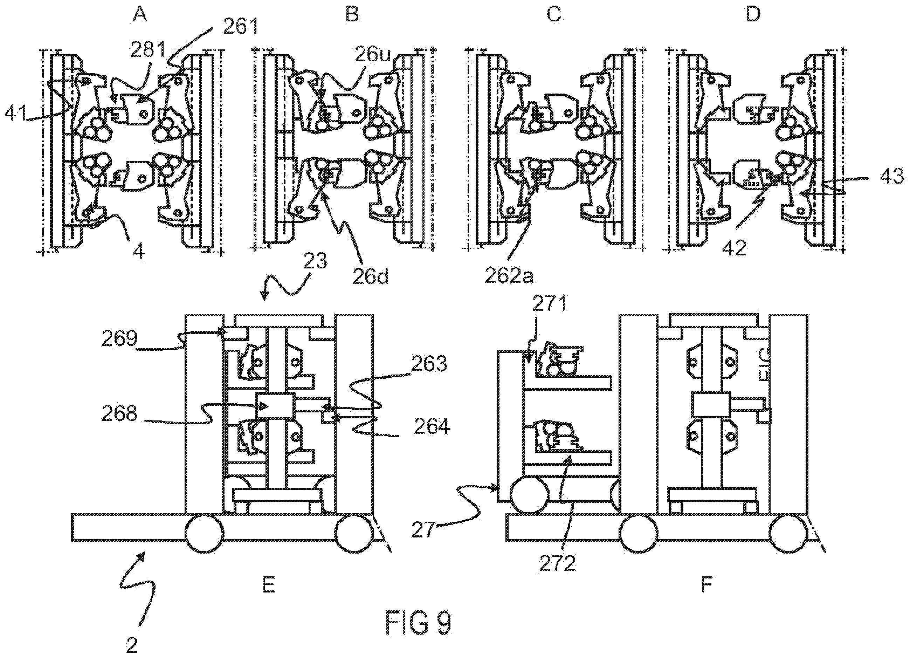

La Figure 9 présente un exemple d'étapes réalisables par l'installation de démontage selon l'invention et permettant un changement simultané de deux grappes ou de quatre cylindres de soutien latéral par un dispositif d'extraction équipé dudit outil de préhension, i.e. la poutre support comprenant à chacune de ses extrémités ledit berceau selon l'invention. Les étapes à réaliser afin de changer simultanément les quatre cylindres de soutien latéral sont exactement les mêmes que celles décrites pour la Figure 7. Pour un démontage d'un jeu de grappes, par exemple le démontage simultané d'une grappe supérieure 26u et d'une grappe inférieure 26d, les cylindres de travail et intermédiaires sont préalablement extraits de la cage et les organes d'appuis latéraux 4 pivotés autour de leur axe de pivotement 41 respectif sous l'action de vérins (non représentés) vers une position écartée comme représentée en figure 9A, afin de libérer un passage dans l'axe de la cage (axe de défilement de la bande) entre lesdits organes d'appuis latéraux 4 pour le dispositif d'extraction. Ce dernier peut alors se déplacer en direction de la cage de laminage entre lesdits organes d'appuis latéraux 4 à partir de sa position de parking. Il se positionne dans ledit passage dans l'axe de la cage de manière à permettre aux organes d'appuis latéraux 4 des deux grappes 26u, 26d concernées de pivoter en position rapprochée en s'insérant entre les deux berceaux 281 de préhension de la poutre support située, avec ses berceaux 281, entre les platines 261 de préhension de la traverse supérieure ou respectivement inférieure. L'outil de préhension se déplace en particulier par rapport aux platines 261 selon une direction parallèle au sens de défilement de la bande pour prendre en charge les grappes supérieure 26u et inférieure 26d pivotées. Chaque pêne de verrouillage de grappe 262a destiné à solidariser ladite grappe 26u, 26d pivotée avec le dispositif d'extraction est actionné afin de solidariser ladite grappe 26u, 26d avec ledit dispositif d'extraction, notamment la poutre transversale de la grappe supérieure 26u avec les platines 261 de préhension équipant la traverse supérieure, et la poutre transversale de la grappe inférieure 26d avec les platines 261 de préhension équipant la traverse inférieure. A cette fin, chaque pêne de verrouillage de grappe 262a est apte à soit à s'insérer dans une cavité de la poutre transversale de la grappe, soit à presser une extrémité d'un poussoir à ressort capable de fonctionner comme un verrou, ladite extrémité étant par exemple une tige susceptible de dépasser hors de ladite cavité, le reste du corps dudit poussoir à ressort étant compris dans ladite cavité. Le poussoir à ressort comprend donc en particulier ladite tige et un dispositif à ressort. Ledit poussoir à ressort peut ainsi être compressé dans ladite cavité par ledit pêne de verrouillage de grappe 262a lors de la solidarisation de la grappe aux platines 261 de préhension, et est apte à se détendre lors d'un relâchement de la pression exercée par ledit pêne de verrouillage de grappe 262a. Lors de la détente du poussoir à ressort, la tige de ce dernier est apte à fonctionner comme un verrou en dépassant longitudinalement hors de ladite cavité. Avantageusement, ladite tige du poussoir à ressort permet en particulier une solidarisation de la grappe avec l'outil de préhension lorsque les pênes de verrouillage de grappe 262a relâchent la pression que chacun exerce contre ladite tige d'un des poussoirs à ressort susceptible d'équiper chaque cavité de chaque poutre transversale de grappe.

Préférentiellement, la compression dudit poussoir à ressort par ledit pêne de verrouillage de grappe 262a est apte à désolidariser la poutre transversale de grappe 42 de ses bras de support 43 comme indiqué sur la figure 9B. En particulier, ladite compression, respectivement la détente ou relâchement, dudit poussoir est apte à relâcher, respectivement actionner, un système de clamage capable de désolidariser, respectivement solidariser, ladite poutre transversale à ses bras de support 43. Ces derniers, une fois désolidarisés de leur poutre transversale respective sont pivotés en position écartée afin de permettre au dispositif d'extraction de se retirer en position de parking dans son compartiment de la navette en portant les deux grappes comme indiqué sur les figures 9C et 9D.

La figure 9E présente un chariot porte-console 27 situé latéralement par rapport au compartiment 23 de la navette 2 et comportant une console supérieure 271 et une console inférieure 272. Ledit chariot porte-console 27 est engageable dans le compartiment 23 de navette 2 par un mouvement parallèle au défilement de la bande afin de prendre en charge respectivement la grappe supérieure 26u et la grappe inférieure 26d, chacune étant solidarisée à son outil de préhension désolidarisé du dispositif d'extraction. Le chariot porte-console 27 et ses consoles supérieure 271 et inférieure 272 supportant chacune une grappe équipée de son outil de préhension peut alors être extrait du compartiment 23 de la navette 2 par un mouvement latéral hors dudit compartiment, comme indiqué sur la figure 9F. L'extraction du chariot porte-console 27 hors dudit compartiment 23 libère notamment le dispositif d'extraction pour une prise en charge de grappes neuves afin de les introduire dans la cage de laminage en lieu et place de celles précédemment démontées.

A cette fin, le dispositif d'extraction est en particulier capable de se positionner, par avancée vers la cage de laminage, en une position intermédiaire, en face d'un autre chariot porte-console identique audit chariot porte-console 27, mais comprenant sur chacune de ses consoles supérieure et inférieure une grappe neuve solidarisée à un autre outil de préhension. L'autre chariot porte-console peut alors être engagé dans le compartiment 23 de navette 2 par un mouvement parallèle au défilement de la bande afin de mettre les grappes supérieure et inférieure dans une position permettant la prise en charge des outils de préhension par le dispositif d'extraction, en particulier, un support de l'organe de supportage de chaque berceau par lesdites platines 261 de préhension.

Le dispositif d'extraction est ensuite avancé dans l'axe de la cage de laminage, dans le passage libéré par le pivotement des bras de support 43 des grappes. Une fois en place en position de préhension, les bras de support 43 de chaque grappe destinée à être montée pivotent en position rapprochée en s'insérant entre les deux berceaux 281 de l'outil de préhension, qui sont chacun en particulier apte, par déplacement dudit outil de préhension parallèlement au plan de défilement de la bande, en direction desdits bras de support 43, à permettre auxdites poutres transversale 42 desdites grappes destinées à être montées d'accoster lesdits bras de support 43. Les pênes de verrouillage de grappe 262a sont ensuite actionnés afin d'assurer la désolidarisation de la grappe d'avec les berceaux 281 et sa solidarisation simultanée à ses bras de support 43 au moyen du système de clamage décrit précédemment. Les deux organes d'appuis latéraux 4 peuvent alors pivoter en position écartée afin de laisser libre le passage au dispositif d'extraction qui se retire en position de parking dans le compartiment 23 de la navette 2.

S'il est nécessaire de changer les quatre grappes, les étapes décrites ci-dessus avec la Figure 9 pour le changement d'une grappe supérieure et d'une grappe inférieure sont reproduites intégralement pour une autre grappe supérieure et une autre grappe inférieure, après un déplacement de chaque outil de préhension en direction desdites autres grappes destinées à être changées, comme indiqué notamment en figure 9D.

La Figure 10 présente une cage de laminage adaptée à l'installation de démontage selon l'invention, et pour laquelle les organes d'appuis latéraux sont en position écartée et les cylindres de travail ont été retirés. Cette cage de laminage est une cage de laminage sexto qui comprend classiquement un cylindre de travail supérieur situé au-dessus d'un plan de défilement de la bande à laminer, et un cylindre de travail inférieur situé au-dessous dudit plan de défilement de la bande à laminer, un cylindre intermédiaire supérieur apte à être en contact avec le cylindre de travail supérieur et un cylindre intermédiaire inférieur apte à être en contact avec le cylindre de travail inférieur, et, un cylindre d'appui supérieur apte à être en contact avec le cylindre intermédiaire supérieur et un cylindre d'appui inférieur apte à être en contact avec le cylindre intermédiaire inférieur, les cylindres d'appui supérieur et inférieur étant aptes à transmettre une force de serrage aux cylindres de travail par l'intermédiaire des cylindres intermédiaires. Selon la configuration sexto, la cage de laminage adaptée à la présente invention comprend au moins un organe d'appui latéral apte à soutenir latéralement un desdits cylindres de travail, en particulier un premier et un second organe d'appui latéral supérieur, situés respectivement de part et d'autre d'un plan de serrage de la bande par les cylindres de travail et aptes à soutenir latéralement ledit cylindre de travail supérieur, et un premier et un second organe d'appui latéral inférieur, situés de part et d'autre dudit plan de serrage et aptes à soutenir latéralement le cylindre de travail inférieur.

La cage de laminage adaptée à l'installation selon l'invention est caractérisée en ce que chacun des bras de support des grappes supérieures 26u est apte à comprendre en particulier une surface 711u de glissement ou de roulement apte à coopérer avec des roulettes ou des patins de glissement (non représentés) pouvant équiper des oreilles 211u des empoises 21u du cylindre intermédiaire supérieur 3u. Ainsi, lors du démontage, une extraction d'un cylindre intermédiaire supérieur 3u porté par ses empoises 21u aptes à se déplacer axialement par glissement ou roulement respectivement desdits patins ou desdites roulettes sur lesdites surfaces 711u est réalisable par déplacement axial desdites empoises sur les bras de support des grappes supérieures 26u des organes d'appuis latéraux jusqu'au premier chariot porte-console de l'installation de démontage, hors de la cage de laminage. En particulier, des rails de démontage 44 fixés, dans la cage de laminage auxdits organes d'appuis latéraux 4, peuvent servir de surface de glissement ou de roulement pour les patins ou roulettes desdites empoises et sont avantageusement prolongeables par d'autres rails montés sur la navette de l'installation de démontage selon l'invention afin de permettre un déplacement des cylindres intermédiaires par glissement ou roulement sur lesdits rails, lors du montage ou du démontage desdits cylindres intermédiaires par ledit autre dispositif d'extraction. Similairement, chaque bras de support des grappes inférieures 26d est aussi apte à comprendre une surface de glissement ou de roulement permettant aux empoises du cylindre intermédiaire inférieure de se déplacer axialement par glissement ou roulement au moyen respectivement de patins de glissement ou de roulettes pouvant équiper des surfaces 711d desdites empoises du cylindre intermédiaire inférieur, lesdits patins de glissement ou roulettes étant destinés à coopérer par exemple avec des rails 44 montés sur les bras de support de la grappe inférieure 26d afin de permettre une extraction ou un montage du cylindre intermédiaire inférieur 3d et de ses empoises 21d au moyen de l'installation de démontage selon l'invention, lesdits rails 44 étant prolongeable par des rails montés dans la navette de ladite installation de démontage. De plus, la cage de laminage adaptée à la présente installation de démontage est en outre caractérisée en ce que chaque cylindre de soutien latéral comprend ledit système de verrouillage de cylindre de soutien latéral, et ce que ses organes d'appuis latéraux comprennent en particulier ledit système de clamage décrit notamment en Fig. 12.

La Figure 11 décrit, à titre d'exemple, un dispositif d'extraction selon l'invention. Ce dispositif d'extraction comprend en particulier une traverse supérieure 265, équipée, à chacune de ses extrémités, d'une platine 261 de préhension, chaque platine 261 de préhension comprenant au moins un pêne de verrouillage de grappe 262a et au moins un pêne de verrouillage de cylindre de soutien latéral 262b. La traverse inférieure du dispositif d'extraction est identique à ladite traverse supérieure 265, mais est disposée symétriquement par rapport au plan de défilement de la bande, en-dessous de ladite traverse supérieure 265. Les platines 261 de préhension sont en particulier aptes à être accouplées à un outil de préhension de grappe comprenant un premier berceau 281 solidarisé à un second berceau 283 au moyen d'une poutre support 282. Chaque pêne de verrouillage selon l'invention, par exemple le pêne de verrouillage de grappe 262a, ou le pêne de verrouillage de cylindre de soutien latéral 262b, est une pièce mobile actionnable, par exemple hydrauliquement, par un dispositif d'actionnement, de sorte qu'une extrémité du pêne de verrouillage de grappe 262a soit capable de coopérer avec une cavité 421 de la poutre transversale de la grappe, et qu'une extrémité du pêne de verrouillage de cylindre de soutien latéral 262b soit capable d'actionner un dispositif de verrouillage d'axe tel que décrit en Fig. 13. En particulier, ladite cavité 421 comprend un poussoir à ressort 4211 dont une extrémité est susceptible de dépasser hors de ladite cavité 421 et est destinée à être pressée par ledit pêne de verrouillage de grappe 262a. En particulier, ledit poussoir à ressort comprend un ressort et une tige, ladite tige formant ladite extrémité destinée à dépasser hors de ladite cavité. En particulier, ladite tige du poussoir à ressort est destinée à solidariser ladite grappe avec un berceau 281, 283 de l'outil de préhension. A cet effet, chaque berceau de préhension de chaque outil de préhension comprend une première encoche destinée à permettre au pêne de verrouillage de cylindre de soutien latéral 262b de traverser ledit berceau, et une seconde encoche destinée à accueillir l'extrémité de ladite tige du poussoir à ressort afin de solidariser ladite grappe audit berceau. Ainsi, lors du retrait de la grappe, l'outil de préhension, par un déplacement perpendiculaire à ladite traverse supérieure, parallèle au plan de défilement de la bande, d'une position initiale à une position éloignée, est capable d'insérer lesdites tiges des poussoirs à ressort équipant chaque cavité de la poutre transversale supportant la grappe dans ladite seconde encoche de chacun de ses berceaux, puis lesdits pênes de verrouillage de grappe pressent simultanément chacun une desdites tiges de poussoir à ressort afin d'actionner la désolidarisation de la grappe de ses bras de support au moyen du système de clamage, ladite tige du poussoir à ressort étant suffisamment longue pour se maintenir dans ladite seconde encoche lorsqu'elle est pressée par ledit pêne de verrouillage de grappe. Lors du montage de la grappe sur ses bras de support, le pêne de verrouillage de grappe actionne dans un premier temps la tige du poussoir à ressort, ledit actionnement résultant en la solidarisation de la grappe à ses bras de support par ledit moyen de clamage, puis les pênes de verrouillage de grappe relâchent la pression exercée sur lesdites tiges de poussoirs à ressort et l'outil de préhension se déplace de sa position éloignée à sa position initiale, prêt pour le démontage d'une autre grappe.

La Figure 12 décrit deux exemples de réalisation d'organes de clamage selon l'invention pouvant équiper ladite cage de laminage décrite en Fig. 10. Ces organes de clamage sont capables de solidariser/désolidariser la grappe 42 à ses bras de support 43.

La figure 12A présente un premier exemple de réalisation dudit organe de clamage selon l'invention, destiné à équiper chaque bras de support d'une grappe. L'organe de clamage selon ce premier exemple de réalisation comprend un vérin 431 solidaire du bras de support 43 de la grappe 42 comprenant une tige 4311 mobile dont une extrémité en forme de Té 43111 est capable de se verrouiller dans un espace de verrouillage 421 de la poutre transversale de la grappe 42. Cet espace de verrouillage 421 comprend en particulier une rainure de verrouillage 4211 sur les bords de laquelle ladite extrémité en forme de Té 43111 est capable de prendre appui afin de presser ladite poutre transversale contre ledit bras de support 43 afin de la maintenir solidaire de ce dernier. Ledit espace de verrouillage 421 comprend de plus un évidement 4212 formant avec ladite rainure un espace ouvert. Ledit évidement 4212 est apte à laisser passer ladite extrémité en forme de Té 43111 hors de l'espace de verrouillage 421. Des organes de pression élastiques 4312 sont de plus capables d'exercer une pression de verrouillage apte à maintenir solidaires les bras de support 43 et la poutre transversale de la grappe 42.

La désolidarisation de chacun des bras de support 43 d'une grappe 42 d'avec la poutre transversale comprend premièrement une avancée de la tige 4311 du vérin, ladite avancée étant en particulier apte à être actionnée ou commandée par ledit système de commande, afin de relâcher la pression des organes de pression élastiques 4312 sur ladite poutre transversale, puis deuxièmement, un glissement longitudinal de la poutre transversale de la grappe 42 afin d'amener ladite extrémité en forme de Té 43111 dans l'évidement 4212. La poutre transversale, prise en charge par les platines de préhension d'une des traverses du dispositif d'extraction selon l'invention, peut alors être séparée de ses bras de support 43 par simple rotation desdits bras autour de leur axe de rotation 41 respectif.

La figure 12B présente un second exemple de réalisation dudit organe de clamage selon l'invention, destiné à équiper chaque bras de support d'une grappe. L'organe de clamage selon ce second exemple de réalisation comprend un vérin 431 solidaire du bras 43 comprenant une tige 4311 mobile dont une extrémité en forme de coin 43112 est apte à être verrouillée dans une fente 4221 d'une pièce de verrouillage 422 solidaire de la poutre transversale de la grappe 42. Des organes de pression élastiques 4312 sont aptes à exercer une pression de verrouillage capable de maintenir solidaire les bras de support 43 et la poutre transversale 42.

La désolidarisation de chacun des bras de support 43 d'avec la poutre transversale de la grappe 42 à laquelle ils sont solidarisés comprend un recul de la tige 4311 dudit vérin 431 apte à relâcher la pression de verrouillage exercée par les organes de pression élastiques 4312 et capable d'extraire le l'extrémité en forme de coin 43112 de la pièce de verrouillage 422. Ledit recule est en particulier apte à être commandé ou actionné par ledit système de commande. La poutre transversale de la grappe 42, prise en charge par les platines de préhension d'une des traverses du dispositif d'extraction selon l'invention, peut alors être détachée de ses bras de support 43 par simple rotation de chacun desdits bras de support autour de leur axe de rotation 41 respectif.

Selon la présente invention, chaque pêne de verrouillage porté par la platine de préhension, que ce soit un pêne de verrouillage de grappe ou un pêne de verrouillage de cylindre de soutien latéral, est actionnable, ou apte à être commandé, par un dispositif d'actionnement de pêne de verrouillage pouvant être solidarisé à ladite platine. Ledit dispositif d'actionnement dudit pêne de verrouillage est notamment capable de déplacer ledit pêne de verrouillage d'une position verrouillée à une position déverrouillée, et vice versa. Un exemple de dispositif d'actionnement de pêne de verrouillage est un vérin, apte à être fixé à ladite platine de préhension, et comprenant une tige dont une extrémité mobile libre comprend ledit pêne de verrouillage, ou sert de pêne de verrouillage. Le vérin est apte à déplacer sa tige mobile, et donc ledit pêne de verrouillage, de ladite position verrouillée permettant par exemple de verrouiller une grappe ou un cylindre de soutien latéral à ladite platine, à ladite position déverrouillée permettant de libérer ladite grappe ou ledit cylindre de soutien latéral de leur verrouillage avec ledit pêne de verrouillage.

En particulier, la Figure 13 décrit un exemple de réalisation du dispositif d'actionnement de pêne de verrouillage capable d'actionner ou de commander un pêne de verrouillage de cylindre de soutien latéral 262b d'un cylindre de soutien latéral 5. Une platine de préhension 261 est fixée à une des extrémités d'une traverse supérieure 265, représentée partiellement sur la figure. Le dispositif d'actionnement est par exemple un piston 2621 capable de transmettre un mouvement à une pièce mobile 2622, par exemple une tige, apte à servir de pêne de verrouillage 262b. L'extrémité dudit pêne de verrouillage 262b est apte à se verrouiller sur une extrémité d'un axe de rotation 51 fixe en rotation par rapport à une partie 4 de la grappe, et sur lequel peut tourner le cylindre de soutien latéral 5 par l'intermédiaire d'un roulement 52. L'axe de rotation 51 comprend un système de verrouillage comprenant un dispositif de verrouillage d'axe 511 pouvant être maintenu en position verrouillée par un organe de pression élastique 512. Une avancée de la tige 2621 du vérin 262 permet de relâcher une pression apte à être exercée par l'organe de pression élastique 512 pour maintenir le dispositif de verrouillage d'axe 511 en position verrouillée (i.e. cylindre de soutien latéral verrouillé à la partie 4 de la grappe) et d'extraire le dispositif de verrouillage d'axe 511 de la partie 4 de la grappe. Evidemment, la partie 4 de la grappe permet, lors du pivotement des bras de support de la grappe, un pivotement libre de la grappe par rapport à son cylindre de soutien latéral lorsque ce dernier est solidarisé aux platines de préhension au moyen desdits pênes de verrouillage de cylindre de soutien latéral. En effet, la grappe selon l'invention est caractérisée par une disposition constructive apte à permettre le pivotement de la grappe séparée de son cylindre de soutien latéral lorsque ce dernier est pris en charge par le dispositif d'extraction. Cette disposition constructive est par exemple une encoche de chacune des parties 4 de la grappe destinées à solidariser le cylindre de soutien latéral à ladite grappe, ladite encoche permettant un libre passage hors de ladite encoche de chaque pêne de verrouillage de cylindre de soutien latéral verrouillé sur ledit cylindre de soutien latéral, lors du pivotement des bras de support de la grappe. Le cylindre de soutien latéral 5, une fois pris en charge par le dispositif d'extraction, peut ainsi être détaché de sa grappe par simple pivotement des bras de support de ladite grappe, la tige 2621 passant par exemple dans l'encoche pratiquée dans la partie 4 de la grappe, ladite encoche étant par exemple visible en Figure 7C. Le poussoir à ressort décrit précédemment et le dispositif de verrouillage d'axe 511 peuvent en particulier fonctionner d'une manière similaire.

Ainsi, chaque pêne de verrouillage peut être actionné par un tel dispositif d'actionnement, et l'ensemble des dispositifs d'actionnements commandant chacun un pêne de verrouillage de grappe ou de cylindre de soutien latéral peut pour sa part être commandé de manière centralisée par un dispositif de commande central. Dans un mode de réalisation particulier, ce dernier est de plus apte à commander ou contrôler les organes de clamage, les systèmes de commande, l'organe de déplacement du dispositif d'extraction et dudit autre dispositif d'extraction, ainsi que les chariots, la navette, le châssis de manutention, ledit dispositif d'extraction, et enfin le ou lesdits autres dispositifs d'extraction afin de permettre une automatisation du changement d'au moins un cylindre et/ou d'au moins une grappe de la cage de laminage.

En résumé, l'installation de démontage et la méthode de changement des cylindres et/ou grappes d'une cage de laminage selon l'invention présentent plusieurs avantages par rapport aux installations et méthodes existantes en ce que:
- elles permettent de limiter le temps d'arrêt du laminoir lors de changements de cylindres/grappes d'une cage de laminage;
- elles permettent un changement sélectif des cylindres/grappes;
- elles permettent de changer des cylindres/grappes d'une cage de laminage dont les organes d'appuis latéraux pivotent autour d'axes de pivotements solidaires de blocs de cambrage des cylindres intermédiaires;
- elles permettent un montage de cylindres intermédiaires plus simple et plus rapide, notamment en libérant ces derniers de l'utilisation contraignante de roulements destinés à assurer un déplacement axial de leurs tourillons, étant donné que les organes d'appuis latéraux ont des points de pivot solidaires des blocs de cambrage, lesdits points de pivot permettant le pivotement des bras de support des grappes.

## Revendications

1. Installation de démontage adaptée au changement de cylindres et de grappes d'une cage de laminage destinée au laminage d'une bande métallique, ladite grappe étant constituée d'un cylindre de soutien latéral et de rangées de galets d'appui montés sur une poutre transversale à la cage de laminage, ladite grappe étant montée sur un bras de support, et comprenant:
- un châssis (1) de manutention comprenant des moyens de positionnement et de déplacement aptes à assurer son déplacement et son positionnement selon au moins une première direction définissable par rapport à ladite cage de laminage;
- une navette (2) mobile capable de se déplacer sur ledit châssis selon une seconde direction perpendiculaire à ladite première direction;
**caractérisée en ce que** :
- ladite navette (2) comprend un dispositif d'extraction (26) capable de démonter de la cage de laminage, ou d'y monter, ladite grappe, ledit dispositif d'extraction (26) comprenant:
- une traverse supérieure (265) solidarisée, au moyen d'une entretoise (267) mobile, à une traverse inférieure (266) disposée en-dessous de ladite traverse supérieure (265), chacune desdites traverses comprenant à chacune de ses extrémités une platine (261) de préhension comprenant au moins un pêne (262) de verrouillage, lesdites platines (261) de préhension d'une même traverse étant destinées à la préhension de la grappe par actionnement dudit pêne (262) de verrouillage;
- ledit pêne (262) de verrouillage étant apte à actionner un système de clamage de ladite grappe capable de solidariser ladite grappe avec son bras de support ou de l'y désolidariser,
- un organe de déplacement dudit dispositif d'extraction apte à déplacer ledit dispositif d'extraction (26) selon ladite première direction par action sur ladite entretoise (267) solidaire desdites traverses supérieures (265) et inférieures (266).

2. Installation de démontage selon revendication 1, **caractérisée en ce que** le dispositif d'extraction (26) comprend un dispositif de déplacement de platine (261) de préhension apte à déplacer au moins verticalement au moins une desdites platines (261) de préhension.

3. Installation de démontage selon une des revendications 1 ou 2, **caractérisée en ce que** chaque platine (261) comprend deux pênes (262) de verrouillage de cylindre de soutien latéral et deux pênes (262) de verrouillage de grappe, destinés respectivement au verrouillage/déverrouillage d'au moins un cylindre de soutien latéral, et au verrouillage/déverrouillage d'au moins une grappe.

4. Installation de démontage selon la revendication 3, **caractérisée en ce qu'**au moins un desdits pênes (262) de verrouillage de cylindre de soutien latéral est apte à actionner un système de verrouillage dudit cylindre de soutien latéral capable de solidariser ou désolidariser ledit cylindre de soutien latéral avec/de ladite grappe.

5. Installation de démontage selon une des revendications 1 à 4, **caractérisée en ce qu'**au moins une platine (261) de préhension d'une traverse est apte à coopérer avec un berceau mobile de préhension de grappe positionnable entre ladite platine et l'autre platine équipant la même traverse, ledit berceau comprenant au moins un organe de supportage permettant un support dudit berceau par ladite platine de préhension.

6. Installation de démontage selon une des revendications 1 à 5, **caractérisée en ce que** lesdites traverses supérieures (265) et inférieures (266) comprennent chacune un moyen de guidage apte à guider la traverse sur un rail (269) prolongeable dans la cage de laminage.

7. Installation de démontage selon une des revendications 1 à 6, **caractérisée en ce que** ledit dispositif d'extraction est logeable dans un compartiment (23) de ladite navette (2) adapté au changement d'au moins une grappe et/ou d'au moins un cylindre de soutien latéral de ladite cage de laminage par ledit dispositif d'extraction, ledit compartiment (23) étant apte à être desservi par au moins un chariot porte-console (27) mobile comportant une console supérieure (271) et une console inférieure (272) destinées chacune à servir de support à au moins une grappe ou au moins un cylindre de soutien latéral.

8. Installation de démontage selon la revendications 7, **caractérisée en ce que** ladite navette (2) comprend au moins un autre compartiment (21, 22) disposé latéralement, selon ladite seconde direction, à côté dudit compartiment (23) apte à être desservi par ledit chariot porte-console (27), et comprenant un autre dispositif d'extraction (25A, 25B) capable de changer un cylindre de travail et/ou un cylindre intermédiaire, et ayant les caractéristiques suivantes:
- un corps allongé apte à être disposé en longueur, sensiblement horizontalement, selon ladite première direction dans ledit autre compartiment (21, 22);
- à une extrémité dudit corps allongé et fixé à ce dernier, un organe de préhension d'un cylindre de travail comprenant deux mors fixes aptes à saisir chacun un tourillon d'un cylindre de travail,
- dans ledit corps allongé et pouvant sortir de celui-ci, deux pênes actionnables chacun par un vérin, et capables de se verrouiller chacun sur une empoise du cylindre intermédiaire ou sur un organe rapporté à ladite empoise,
- un organe de déplacement dudit corps allongé apte à déplacer ledit corps allongé selon ladite première direction.

9. Cage de laminage adaptée à l'installation de démontage selon revendications 1 à 8, comprenant:
- deux cylindres de travail aptes à enserrer une bande à laminer, respectivement un cylindre de travail supérieur situé au-dessus d'un plan de défilement de la bande à laminer, et un cylindre de travail inférieur situé au-dessous dudit plan de défilement de la bande à laminer;
- deux cylindres intermédiaires, respectivement un cylindre intermédiaire supérieur apte à être en contact avec le cylindre de travail supérieur et un cylindre intermédiaire inférieur apte à être en contact avec le cylindre de travail inférieur;
- deux cylindres d'appui, respectivement un cylindre d'appui supérieur apte à être en contact avec le cylindre intermédiaire supérieur, et un cylindre d'appui inférieur apte à être en contact avec le cylindre intermédiaire inférieur, les cylindres d'appui supérieur et inférieur étant aptes à transmettre une force de serrage aux cylindres de travail par l'intermédiaire des cylindres intermédiaires;
- au moins un organe d'appui latéral comprenant une grappe apte à être supportée par des bras de support, ledit organe d'appui latéral étant apte à soutenir latéralement un desdits cylindres de travail au moyen d'un cylindre de soutien latéral compris dans ladite grappe;
**caractérisée en ce que**
- des empoises de chaque cylindre intermédiaire comprennent un moyen de déplacement apte à permettre un déplacement desdites empoises sur une surface de glissement ou de roulement de l'organe d'appui latéral;
- chaque cylindre de soutien latéral comprend un système de verrouillage de cylindre de soutien latéral;
- chaque organe d'appui latéral comprend un système de clamage de grappe apte à solidariser/désolidariser ladite grappe à son bras de support lors de son actionnement par le pêne (262) de verrouillage de grappe de l'installation de démontage,
- le système de verrouillage comprend un dispositif de verrouillage d'axe disposé dans une extrémité de l'axe de rotation dudit cylindre de soutien latéral, et apte à être maintenu dans une position verrouillée par un organe élastique et dans une position déverrouillée par action dudit pêne (262) de verrouillage de cylindre de soutien latéral,
- le système de clamage d'une grappe comprend un vérin solidaire du bras de support de la grappe apte à solidariser/désolidariser ladite grappe à son bras de support lors de son actionnement par le pêne 262 de verrouillage de grappe.

10. Cage de laminage selon revendication 9, **caractérisée en ce que** ledit vérin comprend une tige mobile dont une extrémité en forme de Té est apte à se verrouiller dans un espace de verrouillage de la poutre transversale de la grappe.

11. Cage de laminage selon revendication 9, **caractérisée en ce que** ledit vérin est équipé d'une tige dont une extrémité en forme de coin se verrouille dans une fente d'une pièce de verrouillage solidaire de la poutre transversale de la grappe.

12. Méthode de changement des cylindres et grappes d'une cage de laminage sexto appuyée latéralement comprenant une paire de cylindres de travail encadrée par une paire de cylindres intermédiaires, elle-même encadrée par une paire de cylindres d'appui, chacun desdits cylindres de travail étant supporté latéralement par un organe d'appui latéral comprenant un cylindre de soutien latéral soutenu par des galets d'appuis, ledit cylindre de soutien latéral et ses galets étant montés sur une poutre transverse afin de former une grappe portée par des bras de support, ladite méthode de changement des cylindres et/ou grappes étant **caractérisée en ce qu'**elle comprend les étapes suivantes:
lors du démontage:
- un premier pivotement des bras de support d'au moins une grappe afin de dégager un passage pour un dispositif d'extraction (26) d'au moins un cylindre de soutien latéral et/ou d'au moins une grappe;
- un démontage des cylindres de travail et des cylindres intermédiaires de la cage de laminage;
- un positionnement du dispositif d'extraction (26) de grappes et/ou cylindres dans un prolongement dudit passage;
- un déplacement dudit dispositif d'extraction (26) des cylindres et/ou grappes selon une première direction entre une position de parking et une position de préhension des grappes et/ou cylindres, ladite position de préhension permettant une insertion de la grappe, par pivotement de ses bras de support, entre deux platines (261) de préhension disposées respectivement à une extrémité d'une traverse (265, 266) dudit dispositif d'extraction (26) et à l'autre extrémité de la même traverse (265, 266) ;
- un second pivotement des bras de support de la grappe apte à positionner ladite grappe entre lesdites platines (261) de préhension;
- un déplacement vertical supplémentaire des platines 261 destiné à positionner lesdites platines (261) par rapport à au moins une grappe ou au moins un cylindre de soutien latéral afin de permettre une solidarisation de chaque platine (261) avec au moins ladite grappe et/ou au moins ledit cylindre de soutien latéral;
- ladite solidarisation d'au moins une grappe et/ou d'au moins un cylindre de soutien latéral auxdites platines (261) de préhension par actionnement d'au moins un pêne (262) de verrouillage de chacune desdites platines (261) de préhension;
- pour chaque grappe solidarisée auxdites platines (261) de préhension, une désolidarisation de ladite grappe de ses bras de support par déverrouillage d'un système de clamage de la grappe, et pour chaque cylindre de soutien latéral solidarisé auxdites platines (261) de préhension, une désolidarisation dudit cylindre de soutien latéral de sa grappe par déverrouillage d'un système de verrouillage dudit cylindre de soutien latéral;
- un pivotement des bras de support de ladite grappe en une position écartée du dispositif d'extraction afin de lui dégager un libre passage;
- un déplacement du dispositif d'extraction (26) hors de la cage de laminage jusqu'à ladite position de parking;
- un dépôt de chaque grappe et/ou chaque cylindre de soutien latéral sur une console (271, 272) de dépôt par mouvement vertical desdites platines (261) de préhension en direction de ladite console (271, 272) et libération de chaque cylindre de soutien latéral et de chaque grappe par déverrouillage d'au moins un pêne (262) de verrouillage;
lors du montage:
- une prise en charge par le dispositif d'extraction (26) d'au moins une grappe et/ou d'au moins un cylindre de soutien latéral, d'une part par déplacement vertical d'au moins une platine (261) de préhension en direction d'une console (271, 272) de chargement destinée à supporter chaque grappe et chaque cylindre de soutien latéral destinés à être pris en charge par ledit dispositif d'extraction (26), et d'autre part, pour chaque grappe et chaque cylindre de soutien latéral destinés à être pris en charge, leur verrouillage avec ladite platine 261 au moyen d'au moins un pêne (262) de verrouillage de ladite platine (261) de préhension afin de permettre leur solidarisation avec ladite platine de préhension;
- un déplacement vertical des platines (261) de préhension solidarisées à au moins une grappe et/ou au moins un cylindre de soutien latéral, suivi d'un déplacement horizontal du dispositif d'extraction (26), selon ladite première direction, d'une position intermédiaire de chargement, située entre ladite position de parking et ladite position de préhension, à ladite position de préhension;
- un pivotement de chacun des bras de support destinés à supporter une même grappe d'une position écartée du dispositif d'extraction (26) à une position située entre lesdites platines (261) de préhension et permettant une prise en charge d'une grappe ou d'un cylindre de soutien latéral par lesdits bras de support destinés à supporter la même grappe;
- une solidarisation de chaque grappe à ses bras de support par verrouillage du système de clamage, ou une solidarisation de chaque cylindre de soutien latéral à ladite grappe par verrouillage du système de verrouillage;
- une désolidarisation de chaque grappe et de chaque cylindre de soutien latéral desdites platines (261) de préhension par rétraction d'au moins un pêne (262) de verrouillage desdites platines 261 de préhension;
- un pivotement des bras de support dans une position écartée dudit dispositif d'extraction (26) afin de dégager le passage pour un déplacement dudit dispositif d'extraction (26) hors de la cage de laminage;
- un déplacement du dispositif d'extraction (26) hors de la cage de laminage.

13. Méthode de changement des cylindres et/ou grappes selon la revendication 12, **caractérisée par** un déplacement respectivement d'un premier chariot porte-console (27) comprenant au moins une console (271) destinée au dépôt de la grappe ou du cylindre de soutien latéral et d'un second chariot porte-console comprenant au moins une console destinée au chargement d'une nouvelle grappe ou d'un nouveau cylindre de soutien latéral, selon une direction perpendiculaire à ladite première direction, respectivement entre la position de parking et une position de dépôt pour le premier chariot porte-console (27), et entre la position intermédiaire de chargement et une position d'amenée pour le second chariot porte-console.

## Patentansprüche

1. Demontagevorrichtung zum Wechseln von Walzen und Clustern eines zum Walzen eines Metallbandes bestimmten Walzgerüsts, wobei der Cluster aus einer seitlichen Stützwalze und Stützrollenreihen besteht, die auf einem Querträger am Walzgerüst angebracht sind, wobei der Cluster an einem Stützarm angebracht ist, wobei die Demontagevorrichtung Folgendes umfasst:
- ein Handhabungsgestell (1), das Mittel zum Positionieren und Verschieben umfasst, die zur Gewährleistung seines Verschiebens und seines Positionierens entlang mindestens einer ersten, in Bezug auf das Walzgerüst definierbaren Richtung geeignet sind;
- einen beweglichen Pendelwagen (2), der entlang einer zweiten, zur ersten Richtung senkrechten Richtung auf dem Gestell beweglich ist;
**dadurch gekennzeichnet, dass**:
- der Pendelwagen (2) eine Ausziehvorrichtung (26) umfasst, mit welcher der Cluster vom Walzgerüst demontiert oder daran montiert werden kann, wobei die Ausziehvorrichtung (26) Folgendes umfasst:
- einen oberen Querträger (265), der mittels einer unterhalb des oberen Querträgers (265) angeordneten beweglichen Strebe (267) mit einem unteren Querträger (266) fest verbunden ist, wobei jeder der Querträger an jedem seiner Enden eine Greifplatte (261) umfasst, die mindestens einen Verriegelungsbolzen (262) umfasst, wobei die Greifplatten (261) eines einzelnen Trägers dazu vorgesehen sind, einen Cluster durch Betätigung des Verriegelungsbolzens (262) zu greifen;
- wobei der Verriegelungsbolzen (262) dazu geeignet ist, ein Spannsystem des Clusters zu betätigen, mit dem der Cluster mit seinem Stützarm fest verbunden oder davon getrennt werden kann,
- ein Element zum Verschieben der Ausziehvorrichtung dazu geeignet ist, die Ausziehvorrichtung (26) entlang der ersten Richtung durch Einwirken auf die fest verbundene Strebe (267) der oberen (265) und des unteren (266) Querträger zu verschieben.

2. Demontagevorrichtung nach Anspruch 1, **dadurch gekennzeichnet, dass** die Ausziehvorrichtung (26) eine Vorrichtung zum Verschieben der Greifplatte (261) umfasst, die dazu geeignet ist, mindestens eine der Greifplatten (261) zumindest vertikal zu verschieben.

3. Demontagevorrichtung nach einem der Ansprüche 1 oder 2, **dadurch gekennzeichnet, dass** jede Platte (261) zwei Bolzen (262) zum Verriegeln von seitlichen Stützwalzen und zwei Cluster-Verriegelungsbolzen (262) umfasst, die jeweils dazu vorgesehen sind, wenigstens eine seitliche Stützwalze zu verriegeln/entriegeln und mindestens einen Cluster zu verriegeln/entriegeln.

4. Demontagevorrichtung nach Anspruch 3, **dadurch gekennzeichnet, dass** mindestens einer der Bolzen (262) zum Verriegeln von seitlichen Stützwalzen dazu geeignet ist, ein Verriegelungssystem der seitlichen Stützwalze zu betätigen, das dazu fähig ist, die seitliche Stützwalze mit dem Cluster fest zu verbinden oder davon zu trennen.

5. Demontagevorrichtung nach einem der Ansprüche 1 bis 4, **dadurch gekennzeichnet, dass** mindestens eine Greifplatte (261) eines Querträgers dazu geeignet ist, mit einem beweglichen Clustergreifsattel zusammenzuwirken, der zwischen der Platte und einer anderen Platte, mit der derselbe Querträger ausgestattet ist, positionierbar ist, wobei der Sattel mindestens ein Stützelement umfasst, das ein Abstützen des Sattels durch die Greifplatte ermöglicht.

6. Demontagevorrichtung nach einem der Ansprüche 1 bis 5, **dadurch gekennzeichnet, dass** die oberen (265) und unteren (266) Querträger jeweils eine Führungsvorrichtung umfassen, die dazu geeignet ist, den Querträger auf einer verlängerbaren Schiene (269) in das Walzgerüst zu führen.

7. Demontagevorrichtung nach einem der Ansprüche 1 bis 6, **dadurch gekennzeichnet, dass** die Ausziehvorrichtung in einer Kammer (23) des Pendelwagens (2) aufnehmbar ist, die zum Wechseln mindestens eines Clusters und/oder mindestens einer seitlichen Stützwalze des Walzgerüsts durch die Ausziehvorrichtung ausgelegt ist, wobei die Kammer (23) dazu geeignet ist, von mindestens einem beweglichen Trägerwagen (27) versorgt zu werden, der einen oberen Träger (271) und einen unteren Träger (272) umfasst, die jeweils dazu vorgesehen sind, als Abstützung für mindestens einen Cluster oder mindestens eine seitliche Stützwalze zu dienen.

8. Demontagevorrichtung nach Anspruch 7, **dadurch gekennzeichnet, dass** der Pendelwagen (2) mindestens eine andere Kammer (21, 22) umfasst, die entlang der zweiten Richtung seitlich neben der Kammer (23) angeordnet ist, die dazu geeignet ist, vom Trägerwagen (27) versorgt zu werden, und die eine weitere Ausziehvorrichtung (25A, 25B) umfasst, mit der eine Arbeitswalze und/oder eine Zwischenwalze gewechselt werden kann, und die folgenden Merkmale aufweist:
- einen länglichen Körper, der in der Längsrichtung im Wesentlichen horizontal entlang der ersten Richtung in der anderen Kammer (21, 22) angeordnet werden kann;
- an einem Ende des länglichen Körpers und an diesem befestigt ein Arbeitswalzen-Greifelement, das zwei feste Backen umfasst, die jeweils einen Drehbolzen einer Arbeitswalze greifen können,
- im länglichen Körper und aus diesem entfernbar zwei Bolzen, die jeweils durch einen Zylinder betätigbar sind und jeweils an einer Lagerbuchse der Zwischenwalze oder einem Anbauelement der Lagerbuchse verriegelbar sind,
- ein Element zum Verschieben des länglichen Körpers, das den länglichen Körper entlang der ersten Richtung verschieben kann.

9. Walzgerüst, das für die Demontagevorrichtung nach den Ansprüchen 1 bis 8 ausgelegt ist, umfassend:
- zwei Arbeitswalzen, die dazu geeignet sind, ein zu walzendes Band einzuschließen, bzw. eine obere Arbeitswalze, die sich oberhalb einer Durchlaufebene des zu walzenden Bandes befindet, und eine untere Arbeitswalze, die sich unterhalb der Durchlaufebene des zu walzenden Bandes befindet;
- zwei Zwischenwalzen bzw. eine obere Zwischenwalze, welche die obere Arbeitswalze berühren kann, und eine untere Zwischenwalze, welche die untere Arbeitswalze berühren kann;
- zwei Stützwalzen bzw. eine obere Stützwalze, welche die obere Zwischenwalze berühren kann, und eine untere Stützwalze, welche die untere Zwischenwalze berühren kann, wobei die obere und die untere Stützwalze dazu geeignet sind, über die Zwischenwalzen eine Presskraft auf die Arbeitswalzen auszuüben;
- mindestens ein einen Cluster umfassendes seitliches Stützelement, das von den Stützarmen abgestützt werden kann, wobei das seitliche Stützelement dazu geeignet ist, eine der Arbeitswalzen mittels einer im Cluster enthaltenen seitlichen Stützwalze seitlich abzustützen;
**dadurch gekennzeichnet, dass**
- die Lagerbuchsen einer jeden Zwischenwalze ein Verschiebungsmittel umfassen, das ein Verschieben der Lagerbuchsen auf einer Gleit- oder Lauffläche des seitlichen Stützelements ermöglicht;
- jede seitliche Stützwalze ein Verriegelungssystem der seitlichen Stützwalze umfasst;
- jedes seitliche Stützelement ein Cluster-Spannsystem umfasst, das dazu geeignet ist, bei seiner Betätigung durch den Cluster-Verriegelungsbolzen (262) der Demontagevorrichtung den Cluster mit seinem Stützarm fest zu verbinden / davon zu trennen,
- das Verriegelungssystem eine Achsenverriegelungsvorrichtung umfasst, die in einem Ende der Drehachse der seitlichen Stützwalze angeordnet ist und dazu geeignet ist, von einem elastischen Element in einer verriegelten Position und durch Einwirken des Verriegelungsbolzens (262) der seitlichen Stützwalze in einer entriegelten Position gehalten zu werden,
- das Spannsystem eines Clusters einen mit dem Stützarm des Clusters fest verbundenen Zylinder umfasst, der dazu geeignet ist, bei seiner Betätigung durch den Cluster-Verriegelungsbolzen (262) den Cluster mit seinem Stützarm fest zu verbinden / davon zu trennen.

10. Walzgerüst nach Anspruch 9, **dadurch gekennzeichnet, dass** der Zylinder eine bewegliche Stange umfasst, deren eines T-förmiges Ende in einem Verriegelungsraum des Cluster-Querträgers verrastbar ist.

11. Walzgerüst nach Anspruch 9, **dadurch gekennzeichnet, dass** der Zylinder eine Stange umfasst, deren eines keilförmiges Ende in einer Aussparung eines mit dem Cluster-Querträger fest verbundenen Verriegelungsstücks einrastet.

12. Verfahren zum Wechseln von Walzen und Clustern eines seitlich abgestützten Sexto-Walzgerüsts, umfassend ein Paar Arbeitswalzen, die zwischen einem Paar Zwischenwalzen angeordnet sind, die ihrerseits zwischen einem Paar Stützwalzen angeordnet sind, wobei jede der Arbeitswalzen von einem seitlichen Stützelement seitlich abgestützt ist, das eine seitliche Stützwalze umfasst, die von Stützrollen abgestützt ist, wobei die seitliche Stützwalze und deren Rollen auf einem Querträger montiert sind, wodurch ein Cluster gebildet wird, der von Stützarmen getragen wird, wobei das Verfahren zum Wechseln von Walzen und/oder Clustern **dadurch gekennzeichnet ist, dass** es die folgenden Schritte umfasst:
bei der Demontage:
- ein erstes Schwenken der Stützarme mindestens eines Clusters, um einen Durchgang für eine Ausziehvorrichtung (26) mindestens einer seitlichen Stützwalze und/oder mindestens eines Clusters freizugeben;
- ein Demontieren der Arbeitswalzen und der Zwischenwalzen aus dem Walzgerüst;
- ein Positionieren der Cluster- und/oder Walzen-Ausziehvorrichtung (26) in einer Verlängerung des Durchgangs;
- ein Verschieben der Walzen- und/oder Cluster-Ausziehvorrichtung (26) entlang einer ersten Richtung zwischen einer Parkposition und einer Cluster- und/oder Walzengreifposition, wobei die Greifposition ein Einführen des Clusters durch Schwenken seiner Stützarme zwischen zwei Greifplatten (261), die jeweils an einem Ende eines Querträgers (265, 266) der Ausziehvorrichtung (26) angeordnet sind, und dem anderen Ende desselben Querträgers (265, 266) angeordnet sind, ermöglicht;
- in zweites Schwenken der Stützarme des Clusters, wodurch der Cluster zwischen den Greifplatten (261) positioniert werden kann;
- ein zusätzliches vertikales Verschieben der Platten (261) zum Positionieren der Platten (261) in Bezug auf mindestens einen Cluster oder mindestens eine seitliche Stützwalze, um eine feste Verbindung einer jeden Platte (261) mit zumindest dem Cluster und/oder zumindest der seitlichen Stützwalze zu ermöglichen;
- die feste Verbindung mindestens eines Clusters und/oder mindestens einer seitlichen Stützwalze an den Greifplatten (261) durch Betätigung mindestens eines Verriegelungsbolzens (262) einer jeden der Greifplatten (261);
- für jeden mit den Greifplatten (261) fest verbundenen Cluster ein Trennen des Clusters von seinen Stützarmen durch das Entriegeln eines Spannsystems des Clusters, und für jede mit den Greifplatten (261) fest verbundene seitliche Stützwalze ein Trennen der seitlichen Stützwalze von ihrem Cluster durch das Entriegeln eines Verriegelungssystems der seitlichen Stützwalze;
- ein Schwenken der Stützarme des Clusters in eine beabstandete Position der Ausziehvorrichtung, um einen freien Durchgang freizugeben;
- ein Verschieben der Ausziehvorrichtung (26) aus dem Walzgerüst in die Parkposition;
- ein Ablegen eines jeden Clusters und/oder einer jeden seitlichen Stützwalze auf einem Ablageträger (271, 272) durch ein vertikales Bewegen der Greifplatten (261) in Richtung des Trägers (271, 272) und ein Freigeben einer jeden seitlichen Stützwalze und eines jeden Clusters durch das Entriegeln mindestens eines Verriegelungsbolzens (262);
bei der Montage:
- eine Übernahme zumindest eines Clusters und/oder zumindest einer seitlichen Stützwalze durch die Ausziehvorrichtung (26), einerseits durch ein vertikales Verschieben mindestens einer Greifplatte (261) in Richtung eines Beladeträgers (271, 272) zum Abstützen eines jeden Clusters und einer jeden seitlichen Stützwalze, die zur Übernahme durch die Ausziehvorrichtung (26) vorgesehen sind, und andererseits für jeden Cluster und jede seitliche Stützwalze, die zur Übernahme vorgesehen sind, dessen bzw. deren Verriegeln mit dem Träger (261) mittels mindestens eines Verriegelungsbolzens (262) der Greifplatte (261), um ihre feste Verbindung mit der Greifplatte zu ermöglichen;
- ein vertikales Verschieben der Greifplatten (261), die mit mindestens einem Cluster und/oder mindestens einer seitlichen Stützwalze fest verbunden sind, gefolgt von einem horizontalen Verschieben der Ausziehvorrichtung (26) entlang der ersten Richtung von einer zwischen der Parkposition und der Greifposition befindlichen Zwischenladeposition in die Greifposition;
- ein Schwenken eines jeden der zum Abstützen eines selben Clusters vorgesehenen Stützarme von einer beabstandeten Position der Ausziehvorrichtung (26) zu einer Position, die sich zwischen den Greifplatten (261) befindet und eine Übernahme eines Clusters oder einer seitlichen Stützwalze durch die zum Abstützen desselben Clusters vorgesehenen Stützarme ermöglichen;
- eine feste Verbindung eines jeden Clusters mit seinen Stützarmen durch das Verriegeln des Spannsystems oder eine feste Verbindung einer jeden seitlichen Stützwalze mit dem Cluster durch ein Verriegeln des Verriegelungssystems;
- ein Trennen eines jeden Clusters und einer jeden seitlichen Stützwalze von den Greifplatten (261) durch das Zurückziehen mindestens eines Verriegelungsbolzens (262) der Greifplatten (261);
- ein Schwenken der Stützarme in eine von der Ausziehvorrichtung (26) beabstandete Position zur Freigabe des Durchgangs für ein Verschieben der Ausziehvorrichtung (26) aus dem Walzgerüst;
- ein Verschieben der Ausziehvorrichtung (26) aus dem Walzgerüst.

13. Verfahren zum Wechseln von Walzen und/oder Clustern nach Anspruch 12, **gekennzeichnet durch** ein jeweiliges Verschieben eines ersten Trägerwagens (27), der mindestens einen zum Ablegen des Clusters oder der seitlichen Stützwalze vorgesehenen Träger (271) umfasst, und eines zweiten Trägerwagens, der mindestens einen zum Laden eines neuen Clusters oder einer neuen seitlichen Stützwalze vorgesehenen Träger umfasst, entlang einer Richtung senkrecht zur ersten Richtung bzw. zwischen der Parkposition und einer Ablageposition für den ersten Trägerwagen (27) und zwischen der Zwischenladeposition und einer Zuführposition für den zweiten Trägerwagen.

## Claims

1. Disassembly equipment suitable for changing cylinders and clusters of a roll stand intended for rolling a metal strip, said cluster comprising a lateral supporting cylinder and rows of support rollers assembled on a beam transverse to the roll stand, said cluster being assembled on a supporting arm, and comprising:
- a handling frame (1) including positioning and moving means for moving and positioning same along at least one first direction which can be defined in relation to said roll stand;
- a mobile shuttle (2) capable of moving over said frame along a second direction perpendicular to said first direction;
**characterised in that** said shuttle (2) includes an extraction device (26) capable of disassembling said cluster from the roll stand or of assembling said cluster on it, said extraction device (26) including:
- an upper crossbeam (265) rigidly connected, via a movable strut (267), to a lower crossbeam (266) arranged below said upper crossbeam (265), each of said crossbeams including, at each of the ends thereof, a gripping plate (261) including at least one locking bolt (262), said gripping plates (261) of a single crossbeam being intended to grip said cluster by actuating said locking bolt (262);
- said locking bolt (262) being capable of actuating a clamping system of said cluster capable of rigidly connecting said cluster to its supporting arm or of disconnecting it,
- a moving member of said extraction device capable of moving said extraction device (26) along said first direction by acting on said rigidly connected strut (267) of said upper (265) and lower (266) crossbeams.

2. Disassembly equipment according to claim 1, **characterised in that** the extraction device (26) includes a moving device for gripping plate (261) capable of moving at least vertically at least one of said gripping plates (261).

3. Disassembly equipment according to one of claims 1 or 2, **characterised in that** each plate (261) includes two lateral supporting cylinder locking bolts (262) and two cluster locking bolts (262), intended respectively for locking/unlocking at least one lateral supporting cylinder, and for locking/unlocking at least one cluster.

4. Disassembly equipment according to claim 3, **characterised in that** at least one of said lateral supporting cylinder locking bolts (262) is capable of actuating a locking system of said lateral supporting cylinder capable of rigidly connecting or disconnecting said lateral supporting cylinder to or from said cluster.

5. Disassembly equipment according to one of claims 1 to 4, **characterised in that** at least one gripping plate (261) of a crossbeam is capable of cooperating with a mobile cluster gripping cradle which can be positioned between said plate and the other plate fitted to the same crossbeam, said cradle including at least one supporting member providing for support of said cradle by said gripping plate.

6. Disassembly equipment according to one of claims 1 to 5, **characterised in that** said upper (265) and lower (266) crossbeams each include a guidance means capable of guiding the crossbeam over an extendable rail (269) in the roll stand.

7. Disassembly equipment according to one of claims 1 to 6, **characterised in that** said extraction device can be housed in a compartment (23) of said shuttle (2) suitable for changing at least one cluster and/or at least one lateral supporting cylinder of said roll stand by means of said extraction device, said compartment (23) being capable of being supplied by at least one moving bracket carriage (27) comprising an upper bracket (271) and a lower bracket (272) each intended to act as a support for at least one cluster or at least one lateral supporting cylinder.

8. Disassembly equipment according to claim 7, **characterised in that** said shuttle (2) includes at least one other compartment (21, 22) arranged laterally, along said second direction, alongside said compartment (23) capable of being supplied by said bracket carriage (27), and including another extraction device (25A, 25B) capable of changing a working cylinder and/or an intermediate cylinder, and having the following characteristics:
- an extended body capable of being arranged in length, perceptibly horizontally, along said first direction in said other compartment (21, 22);
- at one end of said extended body and fixed to the latter, a gripping member of a working cylinder including two fixed jaws each capable of grasping a pin of a working cylinder,
- in said extended body and able to be removed from it, two bolts each able to be actuated by a jack, and capable of each being locked on a chock of the intermediate cylinder or on a member attached to said chock,
- a moving member of said extended body capable of moving said extended body along said first direction.

9. Roll stand suitable for the disassembly equipment according to claims 1 to 8, including:
- two working cylinders capable of gripping a strip to be rolled, respectively an upper working cylinder situated above a plane of travel of the strip to be rolled and a lower working cylinder situated below said plane of travel of the strip to be rolled;
- two intermediate cylinders, respectively an upper intermediate cylinder capable of being in contact with the upper working cylinder and a lower intermediate cylinder capable of being in contact with the lower working cylinder;
- two supporting cylinders, respectively an upper supporting cylinder capable of being in contact with the upper intermediate cylinder and a lower supporting cylinder capable of being in contact with the lower intermediate cylinder, the upper and lower supporting cylinders being capable of transmitting a gripping force on the working cylinders through the intermediate cylinders;
- at least one lateral supporting member including a cluster capable of being supported by supporting arms, said lateral supporting member being capable of laterally supporting one of said working cylinders by means of a lateral supporting cylinder included in said cluster;
**characterised in that**
- chocks of each intermediate cylinder include a moving means capable of providing for a movement of said chocks over a sliding or rolling surface of the lateral supporting member;
- each lateral supporting cylinder includes a locking system of a lateral supporting cylinder;
- each lateral supporting member includes a cluster clamping system capable of rigidly connecting/disconnecting said cluster to or from its supporting arm when actuated by the cluster locking bolt (262) of the disassembly equipment,
- the locking system includes an axis locking device arranged in one end of the axis of rotation of said lateral supporting cylinder, and capable of being held in a locked position by an elastic member and in an unlocked position by actuating said lateral supporting cylinder locking bolt (262),
- said cluster clamping system includes a jack rigidly connected to the supporting arm of the cluster capable of rigidly connecting/disconnecting said cluster to or from its supporting arm when actuated by the cluster locking bolt (262).

10. Roll stand according to claim 9, **characterised in that** said jack includes a moving rod, one T-shaped end of which is capable of being locked in a locking space of the transverse beam of the cluster.

11. Roll stand according to claim 9, **characterised in that** said jack is fitted with a rod, one wedge-shaped end of which is locked in a slot of a locking piece rigidly connected to the transverse beam of the cluster.

12. Method for changing cylinders and clusters of a 6-high roll stand supported laterally including a pair of working cylinders gripped by a pair of intermediate cylinders, themselves gripped by a pair of supporting cylinders, each of said working cylinders being supported laterally by a lateral supporting member including a lateral supporting cylinder supported by supporting rollers, said lateral supporting cylinder and its rollers being mounted on a transverse beam so as to form a cluster carried by supporting arms, said method for changing cylinders and/or clusters being **characterised in that** it includes the following steps:
during disassembly:
- a first pivoting of the supporting arms of at least one cluster so as to free a passage for an extraction device (26) of at least one lateral supporting cylinder and/or at least one cluster;
- disassembly of the working cylinders and the intermediate cylinders of the roll stand;
- positioning of the extraction device (26) for clusters and/or cylinders in an extension of said passage;
- movement of said extraction device (26) for the cylinders and/or clusters along a first direction between a parking position and a position gripping the clusters and/or cylinders, said gripping position making it possible to insert the cluster, by pivoting its supporting arms between two gripping plates (261) arranged respectively at one end of a crossbeam (265, 266) of said extraction device (26) and at the other end of the same crossbeam (265, 266);
- a second pivoting of the supporting arms of the cluster capable of positioning said cluster between said gripping plates (261);
- an additional vertical movement of the plates (261) intended to position said plates (261) with respect to at least one cluster or at least one lateral supporting cylinder so as to provide for rigid connection of each plate (261) to at least said cluster and/or at least said lateral supporting cylinder;
- said rigid connection of at least one cluster and/or at least one lateral supporting cylinder to said gripping plates (261) by actuating at least one locking bolt (262) of each of said gripping plates (261);
- for each cluster rigidly connected to said gripping plates (261), disconnection of said cluster from its supporting arms by unlocking a cluster clamping system and, for each lateral supporting cylinder rigidly connected to said gripping plates (261), disconnection of said lateral supporting cylinder from its cluster by unlocking a locking system of said lateral supporting cylinder;
- pivoting of the supporting arms of said cluster in a position away from the extraction device so as to allow it free passage;
- movement of the extraction device (26) out of the roll stand to said parking position;
- placing each cluster and/or each lateral supporting cylinder on a holding bracket (271, 272) through a vertical movement of said gripping plates (261) in the direction of said bracket (271, 272) and release of each lateral supporting cylinder and each cluster by unlocking at least one locking bolt (262);
during assembly:
- acceptance by the extraction device (26) of at least one cluster and/or at least one lateral supporting cylinder, on the one hand by vertical movement of at least one gripping plate (261) in the direction of a holding bracket (271, 272) intended to support each cluster and each lateral supporting cylinder intended to be accepted by said extraction device (26), and, on the other hand, for each cluster and each lateral supporting cylinder intended to be accepted, locking thereof with said plate (261) by means of at least one locking bolt (262) of said gripping plate (261) so as to allow them to be rigidly connected to said gripping plate;
- vertical movement of gripping plates (261) rigidly connected to at least one cluster and/or at least one lateral supporting cylinder, followed by horizontal movement of the extraction device (26) along said first direction, from an intermediate holding position, situated between said parking position and said gripping position, to said gripping position;
- pivoting of each of the supporting arms intended to support a single cluster from a position away from the extraction device (26) to a position situated between said gripping plates (261) and providing for acceptance of a cluster or a lateral supporting cylinder by said supporting arms intended to support the same cluster;
- rigid connection of each cluster to its supporting arms by locking the clamping system, or rigid connection of each lateral supporting cylinder to said cluster by locking the locking system;
- disconnection of each cluster and each lateral supporting cylinder of said gripping plates (261) by retracting at least one locking bolt (262) of said gripping plates (261) ;
- pivoting of the supporting arms in a position away from said extraction device (26) so as to free a passage for a movement of said extraction device (26) out of the roll stand;
- movement of the extraction device (26) out of the roll stand.

13. Method for changing cylinders and/or clusters according to claim 12, **characterised by** movement respectively of a first bracket carriage (27) including at least one bracket (271) intended to position the cluster or the lateral supporting cylinder and of a second bracket carriage including at least one bracket intended to hold a new cluster or a new lateral supporting cylinder, along a direction perpendicular to said first direction, respectively between the parking position and a holding position for the first bracket carriage (27), and between the intermediate holding position and a feed position for the second bracket carriage.
